# EUROPEAN PATENT APPLICATION

(11) **EP 4 654 671 A1**
(43) Date of publication of application: **26.11.2025**
(21) Application number: 24755931.3
(22) Date of filing: 25.01.2024
(51) Int. Cl.: H04W 48/16

(54) **NETWORK ELEMENT SELECTION METHOD AND APPARATUS**

(30) Priority: 13.02.2023 CN 202310148839
(71) Applicant: Huawei Technologies Co., Ltd., Shenzhen, Guangdong 518129 (CN)
(72) Inventor: LI, Yongcui, Shenzhen, Guangdong 518129 (CN); LI, Meng, Shenzhen, Guangdong 518129 (CN); LI, Yan, Shenzhen, Guangdong 518129 (CN)
(74) Representative: Pfenning, Meinig & Partner mbB
(86) International application number: PCT/CN2024/074063
(87) International publication number: WO 2024/169556

(57) **Abstract**

This application relates to the field of communication technologies, and discloses a network element selection method and an apparatus. The method includes: A selection function network element receives a first request message from an access network device, where the first request message is for requesting to select a target core network element for a terminal device, the first request message includes an identifier of the terminal device and type information, and the type information indicates a type of the target core network element. Then, the selection function network element obtains subscription data of the terminal device based on the identifier of the terminal device, selects a first core network element as the target core network element based on the subscription data, and sends address information of the first core network element to the access network device. In this way, the target core network element can be selected for the terminal device in a scenario in which there are interfaces between the access network device and a plurality of core network elements.

## Description

### CROSS-REFERENCE TO RELATED APPLICATIONS

This application claims priority to Chinese Patent Application No. 202310148839.9, filed with the China National Intellectual Property Administration on February 13, 2023 and entitled "NETWORK ELEMENT SELECTION METHOD AND APPARATUS", which is incorporated herein by reference in its entirety.

### TECHNICAL FIELD

This application relates to the field of communication technologies, and in particular, to a network element selection method and an apparatus.

### BACKGROUND

In a wireless communication system, to further implement end-to-end unified orchestration, for example, unified service discovery and service invoking, radio access network (radio access network, RAN)-as-a-service is introduced, that is, an interface between an access network device and a core network element and an interface between a terminal device and the core network element use a service-based form.

After RAN-as-a-service is introduced, there may be interfaces between an access network device and a plurality of core network elements. In this case, how to select a core network element for a terminal device still needs to be further studied.

### SUMMARY

This application provides a network element selection method and an apparatus, to select a core network element for a terminal device in a scenario in which there are interfaces between an access network device and a plurality of core network elements.

**According to a first aspect,** an embodiment of this application provides a network element selection method. The method is applied to a selection function network element or a component (for example, a circuit or a chip) in the selection function network element. An example in which the method is applied to the selection function network element is used. In the method, the selection function network element receives a first request message from an access network device, where the first request message is for requesting to select a target core network element for a terminal device, the first request message includes an identifier of the terminal device and type information, and the type information indicates a type of the target core network element; obtains subscription data of the terminal device based on the identifier of the terminal device; selects a first core network element as the target core network element based on the subscription data; and sends address information of the first core network element to the access network device.

According to the foregoing method, the target core network element can be selected for the terminal device in a scenario in which there are interfaces between the access network device and a plurality of core network elements.

In a possible design, the first request message further includes network information requested by the terminal device, and the network information requested by the terminal device indicates a requirement of the terminal device for accessing a network; and selecting the first core network element as the target core network element based on the first subscription data includes: selecting the first core network element as the target core network element based on the first subscription data and the network information requested by the terminal device.

In a possible design, the network information requested by the terminal device includes one or more of the following: a data network name DNN requested by the terminal device and network slice selection assistance information NSSAI requested by the terminal device.

In a possible design, the identifier of the terminal device is a temporary identifier; and obtaining the subscription data of the terminal device based on the identifier of the terminal device includes: obtaining a permanent identifier corresponding to the temporary identifier; and obtaining the first subscription data of the terminal device based on the permanent identifier.

In a possible design, obtaining the permanent identifier corresponding to the temporary identifier includes: sending the temporary identifier to an identifier storage function network element; and receiving, from the identifier storage function network element, the permanent identifier corresponding to the temporary identifier.

In a possible design, the temporary identifier does not include an access and mobility management function AMF region identifier and/or an AMF set identifier.

In a possible design, the identifier of the terminal device is a permanent identifier.

**According to a second aspect,** an embodiment of this application provides a network element selection method. The method may be applied to an access network device or a component (for example, a circuit or a chip) in the access network device. An example in which the method is applied to the access network device is used. In the method, the access network device sends a first request message to a selection function network element, where the first request message is for requesting to select a target core network element for a terminal device, the first request message includes an identifier of the terminal device and type information, and the type information indicates a type of the target core network element; and the access network device receives address information of a first core network element from the selection function network element, where the first core network element is the target core network element selected for the terminal device.

In a possible design, that the access network device sends the first request message to the selection function network element includes: The access network device receives indication information from the terminal device or a registration function network element, where the indication information indicates to select the target core network element for the terminal device. The access network device sends the first request message to the selection function network element based on the indication information.

In a possible design, the indication information includes the type information.

In a possible design, the first request message further includes network information requested by the terminal device, and the network information requested by the terminal device is used to select the target core network element.

In a possible design, the identifier of the terminal device is a temporary identifier.

In a possible design, the temporary identifier does not include an access and mobility management function AMF region identifier and/or an AMF set identifier.

In a possible design, the identifier of the terminal device is a permanent identifier.

In a possible design, the method further includes: The access network device receives the permanent identifier from the registration function network element, and stores a correspondence between a temporary identifier and the permanent identifier of the terminal device. Alternatively, the access network device receives correspondence information from the registration function network element, where the correspondence information indicates a correspondence between the temporary identifier and the permanent identifier.

In a possible design, the method further includes: The access network device sends a second request message to the first core network element based on the address information of the first core network element, where the second request message includes the identifier of the terminal device, and the second request message is for requesting to establish a connection for the terminal device. The access network device receives address information of a second core network element from the first core network element or the selection function network element, where a type of the second core network element is the same as a type of the first core network element. The access network device sends the second request message to the second core network element based on the address information of the second core network element.

**According to a third aspect,** an embodiment of this application provides a network element selection method. The method may be applied to a first core network element or a component (for example, a circuit or a chip) in the first core network element. An example in which the method is applied to the first core network element is used. In the method, the first core network element receives a second request message from an access network device, where the second request message includes an identifier of a terminal device, and the second request message is for requesting to establish a connection for the terminal device; selects a second core network element for the terminal device based on the second request message, where a type of the second core network element is the same as a type of the first core network element; and forwards the second request message to the second core network element, or sends address information of the second core network element to the access network device.

In a possible design, selecting the second core network element for the terminal device based on the second request message includes: obtaining subscription data of the terminal device based on the identifier of the terminal device; and selecting the second core network element for the terminal device based on the subscription data.

In a possible design, the second request information further includes network information requested by the terminal device, and the network information requested by the terminal device indicates a requirement of the terminal device for accessing a network; and selecting the second core network element for the terminal device based on the subscription data includes: selecting the second core network element for the terminal device based on the subscription data and the network information requested by the terminal device.

In a possible design, the identifier of the terminal device is a temporary identifier; and obtaining the subscription data of the terminal device based on the identifier of the terminal device includes: obtaining a permanent identifier corresponding to the temporary identifier; and obtaining the subscription data of the terminal device based on the permanent identifier.

In a possible design, obtaining the permanent identifier corresponding to the temporary identifier includes: sending the temporary identifier to an identifier storage function network element; and receiving, from the identifier storage function network element, the permanent identifier corresponding to the temporary identifier.

In a possible design, the temporary identifier does not include an access and mobility management function AMF region identifier and/or an AMF set identifier.

In a possible design, the identifier of the terminal device is a permanent identifier.

**According to a fourth aspect,** an embodiment of this application provides a network element selection method. The method is applied to a selection function network element or a component (for example, a circuit or a chip) in the selection function network element. An example in which the method is applied to the selection function network element is used. In the method, the selection function network element receives a first request message from an access network device, where the first request message is for requesting to select candidate core network elements for a terminal device, the first request message includes an identifier of the terminal device and type information, and the type information indicates types of the candidate core network elements; selects the plurality of candidate core network elements for the terminal device based on the first request message; and sends address information of the plurality of candidate core network elements to the access network device.

In a possible design, the first request message includes network information requested by the terminal device and/or allowed NSSAI; and selecting the plurality of candidate core network elements for the terminal device based on the first request message includes: selecting the plurality of candidate core network elements for the terminal device based on the network information requested by the terminal device and/or the allowed NSSAI.

**According to a fifth aspect,** an embodiment of this application provides a network element selection method. The method may be applied to an access network device or a component (for example, a circuit or a chip) in the access network device. An example in which the method is applied to the access network device is used. In the method, the access network device sends a first request message to a selection function network element, where the first request message is for requesting to select candidate core network elements of a target core network element for a terminal device, the first request message includes an identifier of the terminal device and type information, and the type information indicates a type of the target core network element; the access network device receives address information of the plurality of candidate core network elements from the selection function network element; the access network device obtains subscription data of the terminal device based on the identifier of the terminal device; and the access network device selects a first core network element from the plurality of candidate core network elements as the target core network element based on the subscription data.

In a possible design, the first request message further includes network information requested by the terminal device, and the network information is used to select the plurality of candidate core network elements.

In a possible design, that the access network device obtains the subscription data of the terminal device includes: The access network device receives the subscription data from a registration function network element. Alternatively, the access network device obtains the subscription data from a UDM network element.

In a possible design, that the access network device sends the first request message to the selection function network element includes: The access network device receives indication information from the terminal device or the registration function network element, where the indication information indicates to select the target core network element for the terminal device. The access network device sends the first request message to the selection function network element based on the indication information.

In a possible design, the indication information includes the type information.

In a possible design, the identifier of the terminal device is a temporary identifier or a permanent identifier.

In a possible design, the method further includes: The access network device receives the permanent identifier from the registration function network element, and stores a correspondence between the temporary identifier and the permanent identifier. Alternatively, the access network device receives correspondence information from the registration function network element, where the correspondence information indicates a correspondence between the temporary identifier and the permanent identifier.

**According to a sixth aspect,** this application provides a communication apparatus (or a network element selection apparatus). The communication apparatus has a function of implementing the first aspect to the fifth aspect. For example, the communication apparatus includes a corresponding module, unit, or means (means) for performing operations in the first aspect to the fifth aspect. The module, unit, or means may be implemented by software, may be implemented by hardware, or may be implemented by hardware executing corresponding software.

In a possible design, the communication apparatus includes a processing unit and a communication unit. The communication unit may be configured to: receive and send a signal, to implement communication between the communication apparatus and another apparatus. The processing unit may be configured to perform some internal operations of the communication apparatus. Functions performed by the processing unit and the communication unit may correspond to the operations in the first aspect to the fifth aspect.

In a possible design, the communication apparatus includes a processor, and the processor may be configured to be coupled to a memory. The memory may store a computer program or instructions necessary for implementing the functions in the first aspect to the fifth aspect. The processor may execute the computer program or the instructions stored in the memory. When the computer program or the instructions are executed, the communication apparatus is enabled to implement the method in any one of the possible designs or implementations of the first aspect to the fifth aspect.

In a possible design, the communication apparatus includes a processor and a memory. The memory may store a computer program or instructions necessary for implementing the functions in the first aspect to the fifth aspect. The processor may execute the computer program or the instructions stored in the memory. When the computer program or the instructions are executed, the communication apparatus is enabled to implement the method in any one of the possible designs or implementations of the first aspect to the fifth aspect.

In a possible design, the communication apparatus includes a processor and an interface circuit. The processor is configured to: communicate with another apparatus through the interface circuit, and perform the method in any one of the possible designs or implementations of the first aspect to the fifth aspect.

It may be understood that, in the foregoing third aspect, the processor may be implemented by using hardware or software. When the processor is implemented by using hardware, the processor may be a logic circuit, an integrated circuit, or the like. When the processor is implemented by using the software, the processor may be a general-purpose processor, and is implemented by reading software code stored in the memory. In addition, there may be one or more processors, and one or more memories. The memory may be integrated with the processor, or the memory and the processor are disposed separately. In a specific implementation process, the memory and the processor may be integrated into one chip, or may be disposed on different chips. A type of the memory and a manner in which the memory and the processor are disposed are not limited in embodiments of this application.

**According to a seventh aspect,** this application provides a communication system. The communication system may include a selection function network element and an access network device. The selection function network element is configured to perform the network element selection method provided in the first aspect, and the access network device is configured to perform the network element selection method provided in the second aspect. Optionally, the communication system further includes a first core network element, and the first core network element is configured to perform the network element selection method provided in the third aspect.

Alternatively, the communication system may include a selection function network element and an access network device. The selection function network element is configured to perform the network element selection method provided in the fourth aspect, and the access network device is configured to perform the network element selection method provided in the fifth aspect.

**According to an eighth aspect,** this application provides a computer-readable storage medium. The computer storage medium stores computer-readable instructions. When a computer reads and executes the computer-readable instructions, the computer is enabled to perform the method in any one of the possible designs of the first aspect to the fifth aspect.

**According to a ninth aspect,** this application provides a computer program product. When a computer reads and executes the computer program product, the computer is enabled to perform the method in any one of the possible designs of the first aspect to the fifth aspect.

**According to a tenth aspect,** this application provides a chip. The chip includes a processor. The processor is coupled to a memory, and is configured to: read and execute a software program stored in the memory, to implement the method in any one of the possible designs of the first aspect to the fifth aspect.

### BRIEF DESCRIPTION OF DRAWINGS

FIG. 1A and FIG. 1B are diagrams of two network architectures according to an embodiment of this application;
FIG. 2 is a diagram of a service-based interface protocol stack according to an embodiment of this application;
FIG. 3 is a diagram of a network architecture to which an embodiment of this application is applicable;
FIG. 4 is a schematic flowchart corresponding to a network element selection method according to Embodiment 1 of this application;
FIG. 5 is a schematic flowchart corresponding to a network element selection method according to Embodiment 2 of this application;
FIG. 6 is a schematic flowchart corresponding to a network element selection method according to Embodiment 3 of this application;
FIG. 7 is a schematic flowchart corresponding to a network element selection method according to Embodiment 4 of this application;
FIG. 8 is a schematic flowchart corresponding to a network element selection method according to Embodiment 5 of this application;
FIG. 9 is a schematic flowchart corresponding to a network element selection method according to Embodiment 6 of this application;
FIG. 10 is a possible example block diagram of an apparatus according to an embodiment of this application; and
FIG. 11 is a possible diagram of a structure of an apparatus according to an embodiment of this application.

### DESCRIPTION OF EMBODIMENTS

The following describes technical solutions in embodiments of this application with reference to the accompanying drawings in embodiments of this application. The technical solutions in embodiments of this application may be applied to various communication systems, for example, a universal mobile telecommunications system (universal mobile telecommunications system, UMTS), a wireless local area network (wireless local area network, WLAN), a wireless fidelity (wireless fidelity, Wi-Fi) system, a 4th generation (4th generation, 4G) mobile communication system like a long term evolution (long term evolution, LTE) system, a 5th generation (5th generation, 5G) mobile communication system like a new radio (new radio, NR) system, and a future evolved communication system like a 6th generation (6th generation, 6G) mobile communication system.

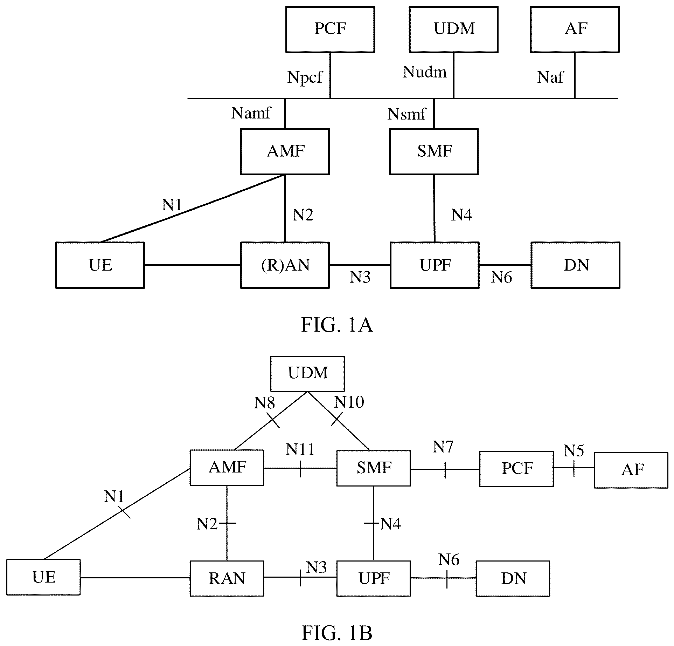

FIG. 1A and FIG. 1B are diagrams of two network architectures according to an embodiment of this application. The network architecture shown in FIG. 1A is a network architecture of a 5G communication system based on a service-based interface, and the network architecture shown in FIG. 1B is a network architecture of a 5G communication system based on a point-to-point interface. As shown in FIG. 1A or FIG. 1B, a terminal device may access a wireless network, to obtain a service of an external network (for example, a data network (data network, DN)) through the wireless network, or communicate with another device through the wireless network. The wireless network may also be referred to as an operator network, and may include a (radio) access network (radio access network, (R)AN) and a core network (core network, CN). The (R)AN (described as a RAN below) is configured to connect the terminal device to the wireless network, and the CN is configured to: manage the terminal device and provide a gateway for communicating with the DN.

The following separately describes the terminal device, the RAN, the CN, and the DN in detail.

### (1) Terminal device

The terminal device is a device that provides voice and/or data connectivity for a user. The terminal device may also be referred to as user equipment (user equipment, UE), a terminal (terminal), an access terminal, a terminal unit, a terminal station, a mobile station (mobile station, MS), a remote station, a remote terminal, a mobile terminal (mobile terminal, MT), a wireless communication device, a terminal agent, a terminal device, or the like.

For example, the terminal device may be a handheld device having a wireless connection function, or may be a vehicle, a vehicle-mounted device (for example, a vehicle-mounted communication apparatus or a vehicle-mounted communication chip), or the like having a communication function. Currently, some examples of the terminal device are as follows: a mobile phone (mobile phone), a cordless phone, a session initiation protocol (session initiation protocol, SIP) phone, a wireless local loop (wireless local loop, WLL) station, a personal digital assistant (personal digital assistant, PDA) device, a handheld device having a wireless communication function, a computing device or another processing device connected to a wireless modem, a tablet computer, a computer having a wireless transceiver function, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

### (2) RAN

The RAN may include one or more access network elements or access network devices, and an interface between the access network device and the terminal device may be a Uu interface (or referred to as an air interface). Certainly, in future communication, names of these interfaces may remain unchanged, or may be replaced with other names. This is not limited in this application.

The access network device is a node or a device that connects the terminal device to the wireless network, and the access network device may also be referred to as a radio access network device or an access network device. The access network device includes, for example, but is not limited to, a generation NodeB (generation NodeB, gNB) in the 5G communication system, an evolved NodeB (evolved NodeB, eNB), a next generation evolved NodeB (next generation eNB, ng-eNB), a home base station ((home evolved NodeB, HeNB) or (home NodeB, HNB)), or the like. The access network device may alternatively be a module or unit that completes a function of a base station, for example, includes a central unit (central unit, CU) and a distributed unit (distributed unit, DU). In a possible network structure, the CU may be configured to support communication in protocols such as RRC, a packet data convergence protocol (packet data convergence protocol, PDCP), and a service data adaptation protocol (service data adaptation protocol, SDAP); and the DU may be configured to support communication in a radio link control (radio link control, RLC) layer protocol, a medium access control (medium access control, MAC) layer protocol, and a physical layer protocol. A specific technology and a specific device form that are used for the access network device are not limited in embodiments of this application.

### (3) CN

The CN may include one or more core network elements. For example, the CN may include a policy control function (policy control function, PCF) network element, a unified data management (unified data management, UDM) network element, an application function (application function, AF) network element, an access and mobility management function (access and mobility management function, AMF) network element, a session management function (session management function, SMF) network element, and a user plane function (user plane function, UPF) network element.

The access and mobility management function network element may be configured to manage access control and mobility of the terminal device. During actual application, the access and mobility management function network element includes a mobility management function of a mobility management entity (mobility management entity, MME) in a network framework in LTE, and includes an access management function. Specifically, the access and mobility management function network element may be responsible for registration of the terminal device, mobility management, a tracking area update procedure, reachability detection, selection of a session management function network element, mobility status transition management, and the like. For example, in 5G, the access and mobility management function network element may be the AMF network element, for example, as shown in FIG. 1A or FIG. 1B; and in future communication, for example, 6G, the access and mobility management function network element may still be the AMF network element or have another name. This is not limited in this application. When the access and mobility management function network element is the AMF network element, the AMF may provide an Namf service.

The session management function network element may be responsible for session management (including session establishment, modification, and release) of the terminal device, selection and reselection of a user plane function network element, internet protocol (internet protocol, IP) address allocation of the terminal device, quality of service (quality of service, QoS) control, and the like. For example, in 5G, the session management function network element may be the SMF network element, for example, as shown in FIG. 1A or FIG. 1B; and in future communication, for example, 6G, the session management function network element may still be the SMF network element or have another name. This is not limited in this application. When the session management function network element is the SMF network element, the SMF may provide an Nsmf service.

The user plane function network element is responsible for forwarding and receiving user data in the terminal device. The user plane function network element may receive user data from the data network, and transmit the user data to the terminal device via the access network device. Alternatively, the UPF network element may receive user data from the terminal device via the access network device, and forward the user data to the data network. A transmission resource and a scheduling function in the UPF network element that provide a service for the terminal device are managed and controlled by the SMF network element. For example, in 5G, the user plane function network element may be the UPF network element, for example, as shown in FIG. 1A or FIG. 1B; and in future communication, for example, 6G, the user plane function network element may still be the UPF network element or have another name. This is not limited in this application.

The policy control function network element mainly supports providing a unified policy framework to control a network behavior, providing a policy rule for a control layer network function, and is responsible for obtaining policy decision-related subscription information of the user. For example, in 5G, the policy control function network element may be the PCF network element, for example, as shown in FIG. 1A or FIG. 1B; and in future communication, for example, 6G, the policy control function network element may still be the PCF network element or have another name. This is not limited in this application. When the policy control function network element is the PCF network element, the PCF network element may provide an Npcf service.

For example, the PCF network element may be classified into two PCFs with different functions: a UE-PCF and an AM-PCF. The UE-PCF may be configured to: generate a UE policy (UE policy), that is, a policy sent to the UE, and a sending path is UE-PCF--->AMF--->UE. In this case, the AMF network element does not parse content of the UE policy, that is, the AMF transparently transmits the UE policy. The AM-PCF may be configured to: generate an AM policy, that is, a policy that is sent to the AMF and that is used for access management, and a sending path is UE-PCF--->AMF. Then, the AMF may further send a part or all of policies for access management to the RAN.

The application function network element mainly supports interaction with a 3^{rd} generation partnership project (3^{rd} generation partnership project, 3GPP) core network to provide a service, for example, affecting a data routing decision or a policy control function, or providing some third-party services for a network side. For example, in 5G, the application function network element may be the AF network element, for example, as shown in FIG. 1A or FIG. 1B; and in future communication, for example, 6G, the application function network element may still be the AF network element or have another name. This is not limited in this application. When the application function network element is the AF network element, the AF network element may provide an Naf service. The AF may provide a service for the core network via an NEF.

The unified data management function network element is configured to: generate an authentication credential, process a subscriber identifier (for example, store and manage a subscription permanent identifier), control access authorization, manage subscription data, and the like. For example, in 5G, the unified data management function network element may be the UDM network element, for example, as shown in FIG. 1A or FIG. 1B; and in future communication, for example, 6G, the unified data management function network element may still be the UDM network element or have another name. This is not limited in this application. When the unified data management function network element is the UDM network element, the UDM network element may provide an Nudm service.

Each network element in the core network may also be referred to as a functional entity or device, and may be a network element implemented on dedicated hardware, a software instance running on dedicated hardware, or an instance of a virtualized function on an appropriate platform. For example, a virtualization platform may be a cloud platform.

In addition, although not shown, the CN may further include other possible network elements, such as a unified data repository (unified data repository, UDR), a short message service function (short message service function, SMSF) network element, and an authentication server function (authentication server function, AUSF) network element. The UDR is configured to store user information and subscription information. The user information may be understood as identification information of the terminal device, for example, a permanent identifier of the terminal device.

### (4) DN

The DN is a serving network providing a data transmission service for the user, for example, an IP multi-media service (IP multi-media service, IMS) or an internet (Internet). The DN is identified by a data network name (data network name, DNN) in a 5G network. The terminal device may access the DN by using a protocol data unit (protocol data unit, PDU) session established between the terminal device and the DN.

In addition, it may be understood that Npcf, Nudm, Naf, Namf, Nsmf, and the like in FIG. 1A are service-based interfaces, and are used to invoke corresponding service-based operations; and in FIG. 1A, N1, N2, N3, N4, N6, and the like are interface sequence numbers, and in FIG. 1B, N1, N2, N3, N4, N5, N6, N7, N8, N10, N11, and the like are interface sequence numbers. For meanings of these interface sequence numbers, refer to meanings defined in related standard protocols.

The network element in embodiments of this application may also be referred to as an entity or a functional entity. For example, the AMF network element may also be referred to as an AMF entity or an AMF apparatus, and the SMF network element may also be referred to as an SMF entity or an SMF apparatus. The network element may be a network element in a hardware device, a software function running on dedicated hardware, or a virtualization function instantiated on a platform (for example, a cloud platform). Optionally, the network element may be implemented by one device, or may be jointly implemented by a plurality of devices, or may be implemented by a functional module in one device. This is not specifically limited in embodiments of this application.

It can be learned from the network architecture shown in FIG. 1A or FIG. 1B that there is an interface between the access network device and only the AMF network element. Therefore, the access network device can only directly communicate with the AMF network element, and interaction between the access network device and a core network element other than the AMF network element needs to be implemented via the AMF network element. For example, interaction between the access network device and the SMF network element needs to be implemented via the AMF network element. To be specific, when the access network device needs to send specific information to the SMF network element, the information needs to be first sent to the AMF network element, and the AMF network element then sends the information to the SMF network element. Similarly, when the SMF network element needs to send specific information to the access network device, the information needs to be first sent to the AMF network element, and the AMF network element then sends the information to the access network device. In this case, a signaling connection of the terminal device is terminated at the AMF network element. For example, a session establishment request, a policy establishment request, and the like of the terminal device are all sent to the AMF network element, and the AMF network element then forwards the session establishment request, the policy establishment request, and the like to a corresponding core network element.

Based on this, after the terminal device accesses the network, the access network device may select the AMF network element for the terminal device, and the AMF network element then selects, for the terminal device, another core network element, for example, the SMF network element, the PCF network element (which may be specifically the UE-PCF network element), or the SMSF network element. Then, the AMF network element may select the core network element for the terminal device based on subscription data of the terminal device and optionally based on network information requested by the terminal device or allowed network slice selection assistance information (network slice selection assistance information, NSSAI). The network information requested by the terminal device indicates a requirement of the terminal device for accessing the network. For example, the network information requested by the terminal device may include a DNN requested by the terminal device and/or NSSAI requested by the terminal device. The NSSAI requested by the terminal device may belong to the allowed NSSAI. The allowed NSSAI indicates a set of slices available for the terminal device using a specific access type (for example, 3GPP) in a specific area. The allowed NSSAI may be determined by the AMF network element for the terminal device. It may be understood that the network slice selection assistance information may alternatively be single network slice selection assistance information (single network slice selection assistance information, S-NSSAI).

For example, the AMF network element may select the SMF network element for the terminal device based on subscription data 1 of the terminal device and the network information requested by the terminal device (and the allowed NSSAI), where the subscription data 1 may be subscription data (that is, SMF selection subscription data) needed for selecting the SMF network element. For another example, the AMF network element may select the UE-PCF network element for the terminal device based on subscription data 2 of the terminal device and the allowed NSSAI, where the subscription data 2 may be subscription data needed for selecting the UE-PCF network element. For another example, the AMF network element may select the SMSF network element for the terminal device based on subscription data 3 of the terminal device and the allowed NSSAI, where the subscription data 3 may be subscription data needed for selecting the SMSF network element.

However, with continuous evolution of the network architecture of the communication system, in addition to the interface between the access network device and the AMF network element, there may be further an interface between the access network device and another core network element. That is, there may be interfaces between the access network device and the plurality of core network elements. In this case, the signaling connection of the terminal device may be terminated at the corresponding core network element. For example, the session establishment request, the policy establishment request, or the like of the terminal device may be directly sent to the corresponding core network element (without forwarding by the AMF network element). This case is different from the foregoing case in which "a signaling connection of the terminal device is terminated at the AMF network element".

There may be a plurality of implementations in which there are the interfaces between the access network device and the plurality of core network elements. In a possible implementation, there are service-based interfaces between the access network device and the plurality of core network elements. For example, it can be learned from FIG. 1A that the service-based interface in the 5G communication system is mainly a service-based interface between different core network elements. To further implement end-to-end unified orchestration, for example, unified service discovery and service invoking, RAN-as-a-service may be introduced, that is, an interface (referred to as an N2 interface in 5G) between the access network device and the core network element and an interface (referred to as a NAS interface in 5G) between the terminal device and the core network element use a service-based form, for example, a hypertext transfer protocol (hypertext transfer protocol, HTTP) protocol. Therefore, RAN-as-a-service is introduced, so that there may be the service-based interfaces between the access network device and the plurality of core network elements.

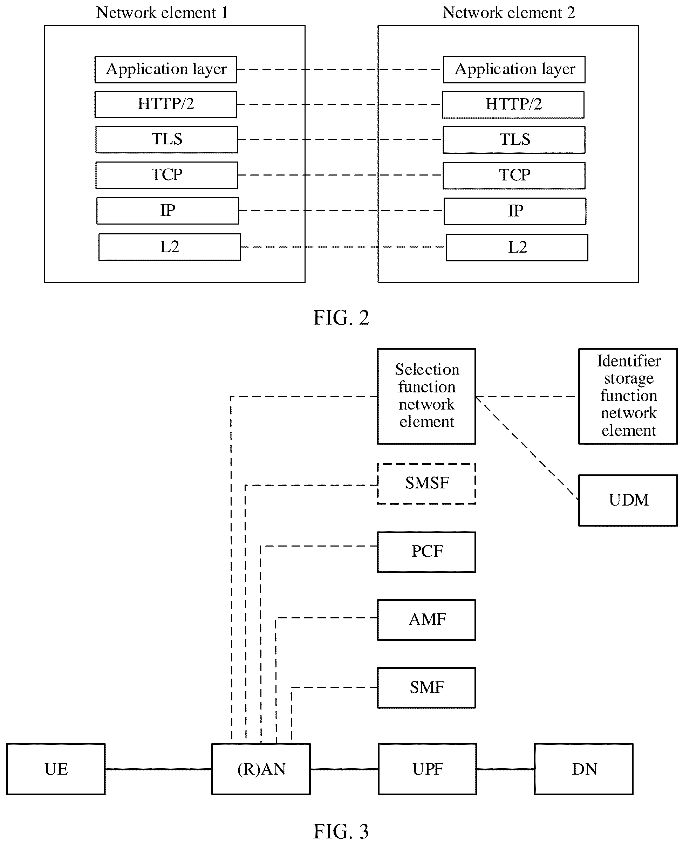

For example, FIG. 2 is a diagram of a service-based interface protocol stack according to an embodiment of this application. As shown in FIG. 2, a transport layer uniformly uses an HTTP/2 protocol between a network element 1 and a network element 2, different service messages are carried at an application layer, and transmission modes at a bottom layer are the same. The bottom layer may include a layer 2 (layer 2, L2), an IP layer, a transmission control protocol (transmission control protocol, TCP) layer, and a transport layer security (transport layer security, TLS) layer. In this way, because the transmission modes at the bottom layer are the same, all service-based interfaces can be transmitted along a same bus, to support flexible service onboarding. It may be understood that the protocol for the transport layer may alternatively be another protocol, for example, an HTTP/3.0 protocol, a quick user datagram protocol (user datagram protocol, UDP) internet connection (quick UDP internet connection, QUIC) protocol or a stream control transmission protocol (stream control transmission protocol, SCTP).

Based on this, "related implementation of selecting a core network element for a terminal device in a scenario in which there are interfaces between an access network device and a plurality of core network elements" is studied below in this application.

All aspects, embodiments, or features are presented in this application by describing a system that may include a plurality of devices, assemblies, modules, and the like. It should be appreciated and understood that, each system may include another device, component, module, and the like, and/or may not include all devices, components, modules, and the like discussed with reference to the accompanying drawings. In addition, a combination of these solutions may be further used.

In addition, in embodiments of this application, terms such as "example" and "for example" are used to represent giving an example, an illustration, or a description. Any embodiment or design solution described as an "example" in this application should not be explained as being more preferred or having more advantages than another embodiment or design solution. Exactly, the term "example" is used to present a concept in a specific manner. In embodiments of this application, "of (of)", "relevant (corresponding, relevant)", and "corresponding (corresponding)" may be interchangeably used sometimes. It should be noted that meanings expressed by the terms are consistent when differences are not emphasized.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With evolution of the network architecture and emergence of new service scenarios, the technical solutions provided in embodiments of this application are also applicable to similar technical problems.

For ease of understanding embodiments of this application, a network architecture shown in FIG. 3 is used as an example to describe in detail a network architecture applicable to an embodiment of this application. As shown in FIG. 3, the network architecture may include some or all of the following plurality of devices or network elements: a terminal device (shown as UE in FIG. 3), an access network device (shown as a RAN in FIG. 3), a registration function network element, an SMF network element, a UPF network element, a UE-PCF network element, an SMSF network element, a UDM network element, a selection function network element, and an identifier storage function network element. There is an interface between the access network device and each of the registration function network element, the SMF network element, the UPF network element, the UE-PCF network element, the SMSF network element, and the selection function network element. For example, if the network architecture is a network architecture obtained after RAN-as-a-service is introduced, the interface between the access network device and each of the registration function network element, the SMF network element, the UPF network element, the UE-PCF network element, the SMSF network element, and the selection function network element may be the service-based interface.

The following describes the devices or the network elements shown in FIG. 3. For descriptions of the terminal device, the access network device, the SMF network element, the UPF network element, the UE-PCF network element, the SMSF network element, the UDM network element, and the like, refer to the foregoing descriptions. The registration function network element, the selection function network element, and the identifier storage function network element are mainly described herein.
**(1)** The registration function network element may be configured to provide an access and authentication function for a user. The registration function network element may be understood as a lightweight AMF network element. It may be understood that the registration function network element may alternatively be replaced with another possible name. This is not limited in embodiments of this application.
**(2)** The selection function network element may be configured to: select core network elements for the terminal device, for example, select a target core network element, an initial core network element, or a candidate core network element (which may be specifically described below). For example, the core network elements in a wireless network may be registered with the selection function network element, so that the selection function network element may select the target core network element, the initial core network element, or the candidate core network element for the terminal device from the registered core network elements. A core network element 1 is used as an example. In a process of registering with the selection function network element, the core network element 1 may send address information of the core network element 1 and a related parameter of the core network element 1 to the selection function network element, and the selection function network element may then store the address information of the core network element 1 and the related parameter of the core network element 1. The related parameter of the core network element 1 may include capability information of the core network element and the like. This is not specifically limited. Optionally, after being successfully registered, the core network element 1 may send real-time load information of the core network element 1 to the selection function network element periodically or based on an event.

For example, the selection function network element may obtain subscription data of the terminal device from a UDM network element, and then select the target core network element for the terminal device based on registration information of the core network element and the subscription data. It may be understood that the selection function network element may alternatively be replaced with another possible name. This is not limited in embodiments of this application. A function of the selection function network element is a logical function, and may be implemented by another network element, for example, implemented by the registration function network element.

In addition, FIG. 3 is illustrated by using an example in which there is the interface between the access network device and the selection function network element. In another possible implementation, there may be no interface between the access network device and the selection function network element. In this case, the access network device may communicate with the selection function network element via a specific network element (that is, there is an interface between the access network device and the specific network element). The network element may be a core network element, and a specific name is not limited.

**(3)** The identifier storage function network element may be configured to store a correspondence between a temporary identifier and a permanent identifier of the terminal device. An identifier storage function may obtain the correspondence between the temporary identifier and the permanent identifier of the terminal device in a plurality of manners. For example, after obtaining the correspondence between the temporary identifier and the permanent identifier of the terminal device, the registration function network element may store the correspondence between the temporary identifier and the permanent identifier of the terminal device in the identifier storage function network element. It may be understood that the identifier storage function network element may alternatively be replaced with another possible name. This is not limited in embodiments of this application. A function of the identifier storage function network element is a logical function, and may be implemented by another network element, for example, implemented by the UDM network element, a UDR, or the registration function network element.

It may be understood that FIG. 3 focuses on interfaces between the access network device and a plurality of core network elements. In addition, there may also be an interface (not shown in FIG. 3) between different core network elements in the plurality of core network elements. For example, there is an interface between the SMF network element and the UPF network element. Signaling connections between the terminal device and different core network elements are not shown in FIG. 3. The network architecture shown in FIG. 3 is not limited to including only the network elements or the devices shown in FIG. 3, and may further include other network elements or devices that are not shown in the figure. Details are not described herein in embodiments of this application one by one. A distribution form of the network elements is not limited in embodiments of this application. The distribution form shown in FIG. 3 is merely an example, and is not limited in this application.

Based on the network architecture shown in FIG. 3, the following describes, with reference to specific embodiments, network element selection methods provided in embodiments of this application.

### Embodiment 1

In Embodiment 1, an access network device may request a selection function network element to select a target core network element for a terminal device. Correspondingly, the selection function network element may send address information of the selected target core network element to the access network device.

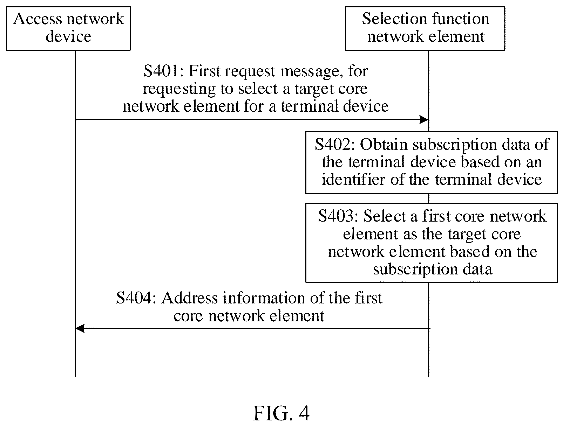

FIG. 4 is a schematic flowchart corresponding to a network element selection method according to Embodiment 1 of this application. As shown in FIG. 4, the method includes the following steps.

**S401:** The access network device sends a first request message to the selection function network element, where the first request message is for requesting to select the target core network element for the terminal device. Correspondingly, the selection function network element receives the first request message from the access network device.

Herein, the first request message may be referred to as a network element discovery request message. For example, the first request message includes an identifier of the terminal device and type information, and the type information indicates a type of the target core network element. Optionally, the first request message further includes network information requested by the terminal device, and the network information requested by the terminal device is used to select the target core network element. For example, when the type of the target core network element is an SMF network element, the first request message further includes the network information requested by the terminal device.
**(1)** A case in which the access network device sends the first request message to the selection function network element is described.

In this embodiment of this application, there may be a plurality of cases in which the access network device sends the first request message to the selection function network element.

In a possible implementation, the access network device may autonomously determine that the target core network element needs to be selected for the terminal device, and send the first request message to the selection function network element. For example, after receiving information (for example, the network information requested by the terminal device and/or allowed NSSAI) used to select a core network element, the access network device determines that the target core network element needs to be selected for the terminal device, that is, the access network device may send the first request message to the selection function network element based on the network information requested by the terminal device and/or the allowed NSSAI. The network information requested by the terminal device may be carried in a registration request message or another possible message. This is not specifically limited.

In another possible implementation, the access network device may alternatively send the first request message to the selection function network element based on triggering of another device or network element.

In an example, the access network device may send the first request message to the selection function network element based on triggering of the terminal device. For example, after receiving indication information from the terminal device, the access network device may send the first request message to the selection function network element based on the indication information, where the indication information indicates to select the target core network element for the terminal device. The indication information may be carried in a registration request message or another possible message. This is not specifically limited.

In another example, the access network device may send the first request message to the selection function network element based on triggering of the core network element. The core network element may be a registration function network element. For example, after receiving indication information from the registration function network element, the access network device may send the first request message to the selection function network element, where the indication information indicates to select the target core network element for the terminal device. The indication information may be carried in an initial context setup request message or another possible message. This is not specifically limited. Alternatively, the core network element may be an SMF network element. For example, after receiving indication information from the registration function network element, the access network device may send the first request message to the selection function network element, where the indication information indicates to select the target core network element (for example, the target SMSF network element) for the terminal device.

**(2)** The identifier of the terminal device is described.

In a possible implementation, the identifier of the terminal device may be a temporary identifier.

For example, the temporary identifier may include an identifier allocated by the access network device to the terminal device, and/or an identifier allocated by the registration function network element to the terminal device. For example, if the temporary identifier includes the identifier allocated by the registration function network element to the terminal device, the registration function network element may send, to the access network device, the identifier allocated to the terminal device, so that the access network device learns of the temporary identifier of the terminal device. If the temporary identifier includes the identifier allocated by the access network device to the terminal device, the access network device may send, to the registration function network element, the identifier allocated to the terminal device, so that the registration function network element learns of the temporary identifier of the terminal device.

The identifier allocated by the access network device to the terminal device includes one or more of a first identifier, a second identifier, or a third identifier. The first identifier may correspond to an interface between the access network device and the terminal device. That is, the first identifier is an air interface identifier allocated by the access network device to the terminal device. The second identifier may correspond to an interface between the access network device and the registration function network element. That is, the second identifier may be a protocol for NG interface (protocol for NG interface, NGAP) identifier (which may be referred to as a RAN UE NGAP ID) allocated by the access network device to the terminal device, where the RAN UE NGAP ID may uniquely indicate a terminal device in a RAN. The third identifier may be different from the first identifier and the second identifier. For example, the third identifier may be a dedicated identifier (for example, dedicated to a core network element selection procedure) allocated by the access network device to the terminal device. Optionally, the access network device may allocate the third identifier to the terminal device based on the network information requested by the terminal device. For example, the access network device may use, as an input, the network information requested by the terminal device, and obtain the third identifier through calculation by using a hash algorithm.

The identifier allocated by the registration function network element to the terminal device includes a fourth identifier and/or a fifth identifier. The fourth identifier corresponds to an interface between the access network device and the registration function network element. That is, the fourth identifier is an NGAP identifier (which may be referred to as an AMF UE NGAP ID) allocated by the registration function network element to the terminal device. The fifth identifier may be different from the fourth identifier. For example, the fifth identifier is a dedicated identifier allocated by the registration function network element to the terminal device. For example, the fifth identifier may not include information about an AMF, for example, does not include an AMF group identifier or an AMF region identifier (AMF region ID), or for another example, does not include an AMF set identifier (AMF set ID). For the AMF region identifier and the AMF set identifier, refer to definitions in an existing standard. Details are not described.

Optionally, the registration function network element may allocate the fifth identifier to the terminal device based on a permanent identifier of the terminal device and/or the network information requested by the terminal device. For example, the registration function network element may use, as an input, the permanent identifier and/or the network information requested by the terminal device, and obtain the fifth identifier through calculation by using the hash algorithm.

For example, the temporary identifier of the terminal device is an identifier pair including the RAN UE NGAP ID and the AMF UE NGAP ID; or the temporary identifier of the terminal device is an identifier pair including the third identifier and the fifth identifier.

For another example, the temporary identifier of the terminal device is the identifier (for example, the fourth identifier and/or the fifth identifier) allocated by the registration function network element to the terminal device. That is, the temporary identifier does not include the identifier allocated by the access network device to the terminal device. Because the identifier allocated by the access network device to the terminal device is valid within coverage of the access network device, if the terminal device moves out of the coverage of the access network device, the temporary identifier needs to be updated, resulting in signaling overheads. The identifier allocated by the registration function network element to the terminal device is valid within a management range of the registration function network element. Therefore, when the temporary identifier of the terminal device is the identifier allocated by the registration function network element to the terminal device, frequent update of the temporary identifier can be effectively avoided, so that signaling overheads are reduced.

In another possible implementation, the identifier of the terminal device may be a permanent identifier. For example, the permanent identifier may be a subscription permanent identifier (subscription permanent identifier, SUPI) and/or a subscription concealed identifier (subscription concealed identifier, SUCI). The SUCI may be an encrypted or privacy-protected SUPI. There may be a plurality of implementations in which the access network device obtains the permanent identifier of the terminal device. For example, the registration function network element may obtain the permanent identifier of the terminal device from the terminal device, and send the permanent identifier of the terminal device to the access network device; the registration function network element sends a correspondence between a temporary identifier and the permanent identifier of the terminal device to the access network device; or the access network device receives the permanent identifier of the terminal device from the terminal device.

**(3)** The type information is described.

The access network device obtains or determines the type (that is, the type information) of the target core network element a plurality of manners.

In a possible implementation, the type of the target core network element may be notified by another network element to the access network device. For example, when the access network device sends the first request message to the selection function network element based on the triggering of the terminal device or the registration function network element, the terminal device or the registration function network element may notify the access network device of the type information. For example, the indication information sent by the terminal device or the registration function network element to the access network device includes the type information.

In another possible implementation, the type of the target core network element may be autonomously determined by the access network device. For example, a selection sequence of different types of core network elements may be preconfigured in the access network device. For example, a possible sequence is PCF--->SMF--->SMSF. Further, if the PCF network element, the SMF network element, and the SMSF network element have not been selected for the terminal device, the access network device may determine that the type of the target core network element is the PCF network element. If the PCF network element has been selected for the terminal device, but the SMF network element and the SMSF network element have not been selected, the access network device may determine that the type of the target core network element is the SMF network element. The rest may be deduced by analogy. Details are not described.

**S402:** The selection function network element obtains subscription data of the terminal device based on the identifier of the terminal device.

Herein, the subscription data of the terminal device is first described. The subscription data of the terminal device may include network element selection subscription data (which may include subscription data needed for selecting various types of target core network elements), access and mobility management subscription data, slice selection subscription data, and the like.

For example, the selection function network element may obtain subscription data (referred to as first subscription data for ease of description) of the terminal device from a UDM network element based on the identifier of the terminal device. The first subscription data may include the network element selection subscription data of the terminal device, for example, include subscription data needed for selecting a target UE-PCF network element, subscription data needed for selecting a target SMF network element, and subscription data needed for selecting a target SMSF network element.

Alternatively, the selection function network element may obtain subscription data (referred to as second subscription data for ease of description) of the terminal device from a UDM network element based on the identifier of the terminal device and the type information. The second subscription data may include subscription data needed for selecting a target core network element (that is, a target core network element of a specific type indicated by the type information). That is, the UDM network element may select, from the network element selection subscription data of the terminal device based on the type information, the subscription data needed for selecting the target core network element, and send the subscription data to the selection function network element. For example, if the type indicated by the type information is a UE-PCF network element, the second subscription data may include subscription data needed for selecting the target UE-PCF network element. Because a data amount of the second subscription data is significantly less than that of the first subscription data, transmission resources can be effectively reduced.

It may be understood that the selection function network element may determine the type of the target core network element by using the type information received from the access network device, or may determine the type of the target core network element by using information provided by the access network device (for example, the network information requested by the terminal device). In an example, the type information may be the network information requested by the terminal device.

In addition, usually, the UDM network element can identify only the permanent identifier of the terminal device, but cannot identify the temporary identifier of the terminal device. Therefore, if the identifier of the terminal device is the permanent identifier, the selection function network element may directly obtain the subscription data of the terminal device from the UDM network element based on the permanent identifier (and the type information); or if the identifier of the terminal device is the temporary identifier, the selection function network element needs to first obtain the permanent identifier corresponding to the temporary identifier, and then obtain the subscription data of the terminal device from the UDM network element based on the permanent identifier (and the type information).

The selection function network element may obtain, in a plurality of manners, the permanent identifier corresponding to the temporary identifier. For example, the selection function network element may send a query request to an identifier storage function network element, where the query request includes the temporary identifier of the terminal device, and the identifier storage function network element may then send, to the selection function network element based on the temporary identifier of the terminal device, the permanent identifier corresponding to the temporary identifier. It may be understood that, in this case, the identifier storage function network element stores a correspondence between the temporary identifier and the permanent identifier of the terminal device. The identifier storage function network element may store the correspondence in the following manners: (1) The registration function network element stores the correspondence in the identifier storage function network element; and (2) The access network device stores the correspondence in the identifier storage function network element.

**S403:** The selection function network element selects a first core network element as the target core network element based on the subscription data.

For example, if obtaining the first subscription data, the selection function network element may select, from the first subscription data based on the type of the target core network element, the subscription data needed for selecting the target core network element, and then select the first core network element from a plurality of core network elements as the target core network element based on the subscription data needed for selecting the target core network element (and the network information requested by the terminal device and/or the allowed NSSAI). If obtaining the second subscription data, the selection function network element may directly select the first core network element from a plurality of core network elements as the target core network element based on the second subscription data (and the network information requested by the terminal device and/or the allowed NSSAI).

The plurality of core network elements herein may be core network elements that are pre-registered with the selection function network element and whose types are the same as the type of the target core network element. The selection function network element may select the first core network element from the plurality of core network elements based on a plurality of bases. This is not limited in embodiments of this application.

It may be understood that, in addition to the subscription data of the terminal device (and the network information requested by the terminal device and/or the allowed NSSAI), the selection function network element may further select the target core network element based on other possible information. This is not limited in embodiments of this application.

**S404:** The selection function network element sends address information of the first core network element to the access network device. Correspondingly, the access network device receives the address information of the first core network element.

In this way, the target core network element can be selected for the terminal device in a RAN service-based architecture through S401 to S404. Optionally, after receiving the address information of the first core network element, the access network device may communicate with the first core network element based on the address information of the first core network element (for example, request the first core network element to establish a connection for the terminal device).

**For example,** if the first core network element is a UE-PCF network element 1, the access network device may send a policy establishment request message to the UE-PCF network element 1 through an interface between the access network device and the UE-PCF network element 1. The policy establishment request message includes an identifier of the terminal device (where the identifier of the terminal device herein may be the same as the identifier of the terminal device included in the first request message), an access type, an access technology type, location information of the terminal device, and the like. Correspondingly, the UE-PCF network element 1 may determine a policy of the terminal device, and return a policy establishment response message to the access network device, where the policy establishment response message includes the policy of the terminal device; and then, the access network device transparently transmits the policy of the terminal device to the terminal device.

Usually, the UE-PCF network element 1 can identify only a permanent identifier of the terminal device, but cannot identify a temporary identifier of the terminal device. Therefore, if the identifier of the terminal device is the temporary identifier, after the UE-PCF network element 1 receives the policy establishment request message, the UE-PCF network element 1 may first obtain the permanent identifier based on the temporary identifier of the terminal device, and then determine the policy of the terminal device based on the permanent identifier of the terminal device; or if the identifier of the terminal device is the permanent identifier, the UE-PCF network element 1 may directly determine the policy of the terminal device based on the permanent identifier of the terminal device.

For example, the UE-PCF network element 1 may obtain the permanent identifier based on the temporary identifier of the terminal device in a plurality of manners. For example, the UE-PCF network element 1 may send a query request to the identifier storage function network element, where the query request includes the temporary identifier of the terminal device, and the identifier storage function network element may then send, to the UE-PCF network element 1 based on the temporary identifier of the terminal device, the permanent identifier corresponding to the temporary identifier.

**For another example,** if the first core network element is an SMF network element 1, the access network device may send a session context setup request message to the SMF network element 1 through an interface between the access network device and the SMF network element 1. The session context setup request message includes an identifier of the terminal device (the identifier of the terminal device herein may be the same as the identifier of the terminal device included in the first request message), an access technology type, a DNN requested by the terminal device, S-NSSAI requested by the terminal device, a session establishment request sent by the terminal device, and the like. Correspondingly, after receiving the session context setup request message, the SMF network element 1 may select a UPF network element, establish an N4 session between the SMF network element 1 and the UPF network element, and obtain tunnel information of the UPF network element; and then, the SMF network element 1 returns a session context setup response message to the access network device, where the session context setup response message carries session information. The session information includes the tunnel information of the UPF network element. Further, the access network device may reconfigure an air interface connection between the access network device and the terminal device, and send, to the SMF network element 1, a session context update request message carrying tunnel information of the access network device. Correspondingly, after receiving the session context update request message, the SMF network element 1 initiates an N4 modification process to the UPF network element, provides the tunnel information of the access network device for the UPF network element, and returns a session context update response message to the access network device.

It may be understood that Embodiment 1 is described by using an example in which "the selection function network element performs an operation of selecting the first core network element based on the first request message from the access network device". The following further describes two other possible implementations: an implementation 1 and an implementation 2.

Implementation 1: The selection function network element may pre-select the first core network element, and then send the address information of the pre-selected first core network element to the access network device after receiving the first request message, so that efficiency of selecting the core network element can be effectively improved.

For example, after obtaining the correspondence between the temporary identifier and the permanent identifier of the terminal device, the identifier storage function network element may send the correspondence between the temporary identifier and the permanent identifier of the terminal device to the selection function network element. Further, the selection function network element may obtain the subscription data of the terminal device (for example, which may be the network element selection subscription data of the terminal device) based on the permanent identifier of the terminal device, and then select various types of target core network elements (for example, select the target UE-PCF network element and the target SMSF network element) based on the subscription data of the terminal device. Subsequently, after the first request message is received from the access network device, the target core network element of the corresponding type that is pre-selected for the terminal device may be found based on the identifier of the terminal device and the type information that are carried in the first request message, and address information of the target core network element of the corresponding type is sent to the access network device.

For example, usually, the SMF network element needs to be selected based on the network information requested by the terminal device and the subscription data. However, in the foregoing manner, the selection function network element pre-selects the target core network element based on the subscription data. Therefore, the foregoing manner is not applicable to the selection of the target SMF network element. Alternatively, before the selection function network element receives the first request message, if the selection function network element can obtain the network information requested by the terminal device, that is, the selection function network element may select the target SMF network element based on the network information requested by the terminal device and the subscription data, the foregoing manner is also applicable to the selection of the target SMF network element.

Implementation 2: The selection function network element may obtain the subscription data of the terminal device in advance, and then select the target core network element for the terminal device based on the subscription data of the terminal device (and the network information requested by the terminal device) after receiving the first request message.

For example, after obtaining the correspondence between the temporary identifier and the permanent identifier of the terminal device, the identifier storage function network element may send the correspondence between the temporary identifier and the permanent identifier of the terminal device to the selection function network element. Then, the selection function network element may obtain the subscription data of the terminal device based on the permanent identifier of the terminal device (for example, which may be the network element selection subscription data of the terminal device). Subsequently, after the first request message is received from the access network device, the target core network element may be selected for the terminal device based on the identifier of the terminal device and the type information (and the network information requested by the terminal device) that are carried in the first request message.

Based on the foregoing solution, the access network device may select the target core network element for the terminal device via the selection function network element, to establish a signaling connection between the access network device or the terminal device and the target core network element in the RAN service-based architecture.

### Embodiment 2

In Embodiment 2, an access network device may request a selection function network element to select an initial core network element for a terminal device. Correspondingly, the selection function network element may send address information of the selected initial core network element to the access network device. Then, the initial core network element selects a target core network element for the terminal device.

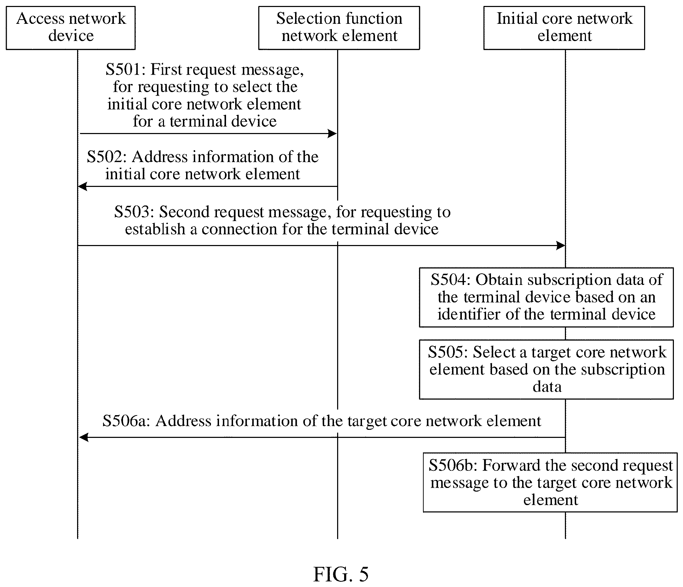

FIG. 5 is a schematic flowchart corresponding to a network element selection method according to Embodiment 2 of this application. As shown in FIG. 5, the method includes the following steps.

**S501:** The access network device sends a first request message to the selection function network element, where the first request message is for requesting to select the initial core network element for the terminal device. For example, the first request message includes an identifier of the terminal device and type information, and the type information indicates a type of the initial core network element. Correspondingly, the selection function network element receives the first request message from the access network device.

For example, for S501, refer to the related descriptions in S401.

**S502:** The selection function network element sends address information of the initial core network element to the access network device based on the first request message.

In a possible implementation, after receiving the first request message, the selection function network element may select an initial core network element for the terminal device from a plurality of core network elements. The plurality of core network elements herein may be core network elements that are pre-registered with the selection function network element and whose types are the same as the type of the initial core network element.

For example, an example in which the type of the initial core network element is an SMF network element is used. The selection function network element may select an initial SMF network element for the terminal device based on information (for example, network information requested by the terminal device) that is included in the first request message and that is used to select the SMF network element. Optionally, if there are a plurality of SMF network elements that meet the network information requested by the terminal device, the selection function network element may randomly select one from the plurality of SMF network elements as the initial SMF network element. For another example, an example in which the type of the target core network element is a UE-PCF network element is used. The selection function network element may select one initial UE-PCF network element for the terminal device from a plurality of UE-PCF network elements based on information (for example, allowed NSSAI) that is included in the first request message and that is used to select the UE-PCF network element For another example, an example in which the type of the target core network element is an SMSF network element is used. The selection function network element may select one initial SMSF network element for the terminal device from a plurality of SMSF network elements based on information (for example, allowed NSSAI) that is included in the first request message and that is used to select the SMSF network element.

For example, in this implementation, "the first request message is for requesting to select the initial core network element for the terminal device" may be described from a perspective of the access network device. That is, from the perspective of the access network device, an objective of sending, by the access network device, the first request message to the selection function network element is to request to select the initial core network element for the terminal device. From a perspective of the selection function network element, after receiving the first request message, the selection function network element selects a core network element based on limited information (for example, the network information requested by the terminal device and/or the allowed NSSAI) carried in the first request message, and the selection function network element may not know whether the core network element selected by the selection function network element is the initial core network element or the target core network element.

In a possible implementation, the selection function network element may preconfigure an initial core network element for each type of core network element. For example, the SMF network element is used as an example. The selection function network element may configure, as the initial SMF network element, one of a plurality of SMF network elements registered with the selection function network element. Then, after receiving the first request message, the selection function network element may send the address information of the initial core network element of the corresponding type to the access network device based on the type information in the first request message.

For example, in this implementation, "the first request message is for requesting to select the initial core network element for the terminal device" may be described from a perspective of the selection function network element. That is, from the perspective of the selection function network element, an objective of knowing the first request message by the selection function network element is to request to select the initial core network element for the terminal device.

It may be understood that "the first request message is for requesting to select the initial core network element for the terminal device" may also be replaced with "the first request message is for requesting to select the target core network element for the terminal device". In other words, the "initial core network element" is introduced for ease of description. From the perspectives of the access network device and the selection function network element, the "initial core network element" and the "target core network element" may not be distinguished from each other.

For S501 and S502, in another possible implementation, an initial core network element may be preconfigured on an access network device side for each type of core network element. For example, an initial SMF network element, an initial UE-PCF network element, and an initial SMSF network element may be preconfigured. In this case, S501 and S502 may not need to be performed. That is, the access network device may directly send a second request message to the initial core network element based on address information of the preconfigured initial core network element, that is, perform S503.

Specifically, an SMF network element is used as an example. An initial SMF network element may be preconfigured on the access network device side. In this case, initial SMF network elements of all terminal devices served by the access network device are all the initial SMF network elements. Alternatively, a plurality of initial SMF network elements may be preconfigured on the access network device side, and different initial SMF network elements correspond to different network information, so that the access network device may select one initial SMF network element for the terminal device from the plurality of initial SMF network elements based on the network information requested by the terminal device.

**S503:** The access network device sends the second request message to the initial core network element based on the address information of the initial core network element, where the second request message is for requesting to establish a connection for the terminal device.

Herein, the second request message includes the identifier of the terminal device and information for requesting to establish the connection.

For example, if the type of the initial core network element is the SMF network element, the second request message may be a session context setup request message, the information for requesting to establish the connection may include a session establishment request sent by the terminal device, and the connection requested to be established may be a PDU session connection. If the type of the initial core network element is the UE-PCF network element, the second request message may be a policy establishment request message, and the information for requesting to establish the connection may include one or more of a temporary identifier of the terminal device, an access type, an access technology type, location information of the terminal device, and the like. If the type of the initial core network element is the SMSF network element, the second request message may be a short message service establishment request message, and the information for requesting to establish the connection may include one or more of a temporary identifier of the terminal device, an access type, an access technology type, and the like.

**S504:** After receiving the second request message, the initial core network element obtains subscription data of the terminal device based on the identifier of the terminal device.

Herein, after receiving the second request message, the initial core network element may obtain the subscription data of the terminal device from a UDM network element based on the identifier of the terminal device. For a related implementation in which the initial core network element obtains the subscription data of the terminal device from the UDM network element, refer to the descriptions of "the selection function network element obtains the subscription data of the terminal device from the UDM network element" in Embodiment 1. Herein, an example in which the initial core network element obtains second subscription data (that is, subscription data needed for selecting the target core network element) is used.

**S505:** The initial core network element selects the target core network element for the terminal device based on the subscription data.

For example, the initial core network element may determine, based on the subscription data of the terminal device, whether the initial core network element can provide a service for the terminal device. If the initial core network element cannot provide the service for the terminal device, for example, cannot provide a slice service, the initial core network element may select the target core network element for the terminal device.

Optionally, the second request message includes the network information requested by the terminal device (for example, a DNN requested by the terminal device and/or NSSAI requested by the terminal device) and/or the allowed NSSAI. In this case, the initial core network element may determine, based on the subscription data of the terminal device, the network information requested by the terminal device and/or the allowed NSSAI, and the like, whether the initial core network element can provide the service for the terminal device.

For example, for implementation of S505, refer to the descriptions of "the selection function network element selects the target core network element for the terminal device based on the subscription data" in Embodiment 1. In this case, it is equivalent to that the initial core network element implements a function of the selection function network element in Embodiment 1.

In addition, after selecting the target core network element for the terminal device, the initial core network element may perform S506a or S506b.

**S506a:** The initial core network element sends address information of the target core network element to the access network device. Then, the access network device may communicate with the target core network element based on the address information of the target core network element. For details, refer to Embodiment 1.

**S506b:** The initial core network element forwards the second request message to the target core network element, so that the target core network element communicates with the access network device.

It may be understood that Embodiment 2 is described by using an example in which "the initial core network element selects the target core network element for the terminal device based on the subscription data". In another possible embodiment, after obtaining the subscription data, the initial core network element may alternatively send the subscription data to the selection function network element, and the selection function network element then selects the target core network element for the terminal device.

Based on the foregoing solution, the access network device may select the target core network element for the terminal device via the selection function network element, to establish a signaling connection between the access network device or the terminal device and the target core network element in a RAN service-based architecture.

### Embodiment 3

In Embodiment 3, an access network device may request a selection function network element to select a candidate core network element for a terminal device. Correspondingly, the selection function network element sends address information of a plurality of selected candidate core network elements to the access network device. Further, the access network device selects a target core network element for the terminal device from the plurality of candidate core network elements.

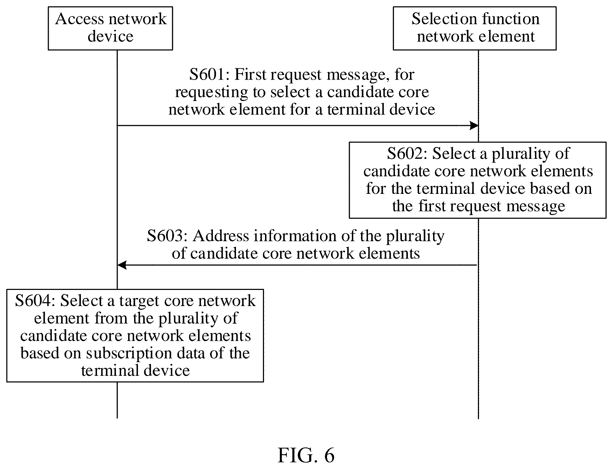

FIG. 6 is a schematic flowchart corresponding to a network element selection method according to Embodiment 3 of this application. As shown in FIG. 6, the method includes the following steps.

**S601:** The access network device sends a first request message to the selection function network element, where the first request message is for requesting to select a candidate core network element for the terminal device. For example, the first request message includes an identifier of the terminal device and type information, and the type information indicates a type of the candidate core network element. Correspondingly, the selection function network element receives the first request message from the access network device.

For example, for S601, refer to the related descriptions in S401.

**S602:** The selection function network element selects a plurality of candidate core network elements for the terminal device based on the first request message.

For example, the selection function network element selects, based on information (for example, information used to select an SMF network element, information used to select a UE-PCF network element, or information used to select an SMSF network element) included in the first request message, the plurality of candidate core network elements from a plurality of core network elements registered with the selection function network element. The SMF network element is used as an example. The selection function network element selects a plurality of candidate SMF network elements for the terminal device based on network information that is requested by the terminal device and that is included in the first request message. The plurality of candidate SMF network elements are SMF network elements that are in a plurality of SMF network elements registered with the selection function network element and that meet the network information requested by the terminal device.

**S603:** The selection function network element sends address information of the plurality of candidate core network elements to the access network device. Correspondingly, the access network device receives the address information of the plurality of candidate core network elements.

**S604:** The access network device selects the target core network element from the plurality of candidate core network elements based on subscription data of the terminal device.

Herein, the access network device may obtain the subscription data of the terminal device in a plurality of manners. For example, the registration function network element may obtain the subscription data (for example, network element selection subscription data) of the terminal device from a UDM network element based on a permanent identifier of the terminal device, and send the subscription data to the access network device. For another example, the access network device may obtain the subscription data of the terminal device from a UDM network element based on a permanent identifier of the terminal device. In this case, there may be an interface (not shown in FIG. 3) between the access network device and the UDM network element. For an implementation in which the access network device obtains the permanent identifier of the terminal device, refer to the descriptions in Embodiment 1.

For example, after selecting the target core network element, the access network device may store a correspondence between the permanent identifier of the terminal device and address information of the target core network element (and another parameter). An example in which a type of the target core network element is an SMF network element is used. The access network device may store a correspondence between the permanent identifier of the terminal device, address information of a target SMF network element, the network information requested by the terminal device, and an identifier of a PDU session.

For Embodiment 1 to Embodiment 3, it may be understood that, in another possible implementation, the selection function network element in Embodiment 1 to Embodiment 3 may be replaced with the registration function network element. That is, the registration function network element may select various types of core network elements (an initial core network element or the target core network element) for the terminal device. In addition, for the identifier storage function network element in Embodiment 1 or Embodiment 2, the registration function network element may store a correspondence between a temporary identifier and the permanent identifier of the terminal device. Therefore, in another possible implementation, the identifier storage function network element may not be set, in other words, the registration function network element may perform a function of the identifier storage function network element.

### Embodiment 4

In Embodiment 4, a detailed implementation procedure is described based on the solution in Embodiment 1.

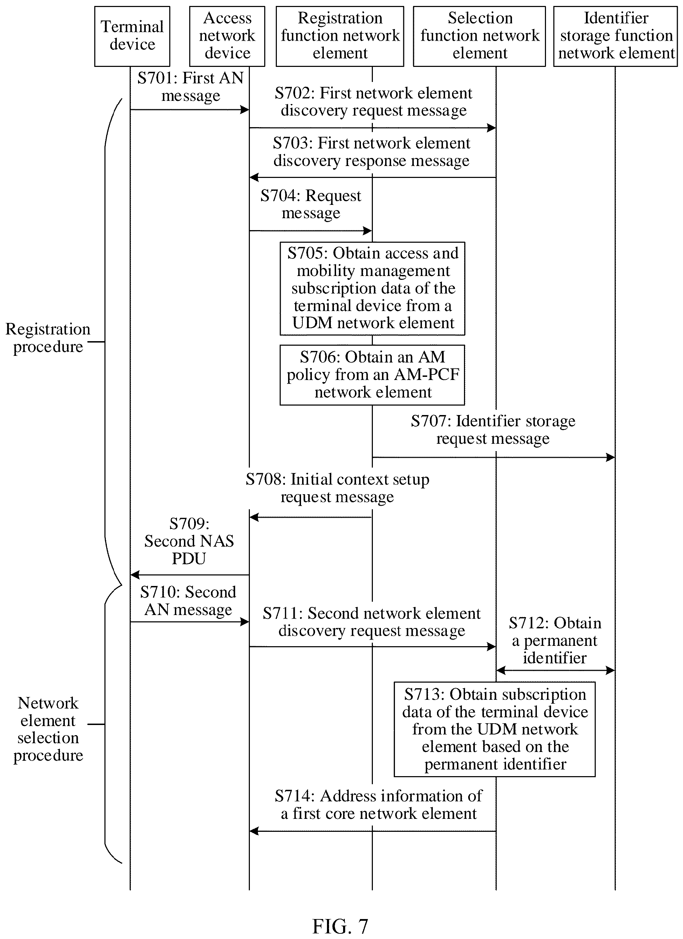

FIG. 7 is a schematic flowchart corresponding to a network element selection method according to Embodiment 4 of this application. As shown in FIG. 7, the method includes the following steps.

S701: A terminal device sends a first AN message (AN message) to an access network device.

Herein, the first AN message includes an AN parameter and a registration request, the registration request may be a first NAS PDU, and the first AN message may be referred to as a registration request message.

The AN parameter includes a public land mobile network (public land mobile network, PLMN) requested by the terminal device, an RRC establishment cause value, and the like, and may further include an air interface identifier of the terminal device.

The registration request may include registration type (registration type) information, and optionally, further includes a permanent identifier of the terminal device. The registration type information indicates that a registration type is initial registration (initial registration).

S702: The access network device sends a first network element discovery request message to a selection function network element, where the first network element discovery request message is for requesting the selection function network element to select a target registration function network element for the terminal device.

For example, the first network element discovery request message may include one or more of the following: target NF type=AMF (indicating that a type of a to-be-selected target network element is the AMF network element or the registration function network element); requester-nf-type=RAN (indicating that a consumer of a requested target network element is the RAN or the access network device); and a RAT type and requested NSSAI from UE (indicating a requirement for the target network element).

S703: The selection function network element sends a first network element discovery response message to the access network device, where the first network element discovery response message includes address information of a registration function network element, and the registration function network element is the target registration function network element selected by the selection function network element for the terminal device.

S704: The access network device sends a request message to the registration function network element, where the request message may be an Namf_InitialUEMessage request.

For example, the Namf_InitialUEMessage request may include an N2 parameter and a first NAS PDU, where the N2 parameter includes one or more of the following: a RAN UE NGAP ID, user location information (user location information, ULI) (that is, location information of the terminal device), and the RRC establishment cause value.

In addition, if a temporary identifier of the terminal device includes a first identifier and/or a third identifier, the access network device may further send the first identifier and/or the third identifier to the registration function network element. For example, the Namf_InitialUEMessage request may further include the first identifier and/or the third identifier, so that the registration function network element learns of the temporary identifier of the terminal device.

It may be understood that, if the first NAS PDU does not include the permanent identifier of the terminal device, after the registration function network element receives the Namf_InitialUEMessage request, the registration function network element may send an identifier obtaining request to the terminal device, to obtain the permanent identifier of the terminal device.

S705: The registration function network element obtains access and mobility management subscription data of the terminal device from a UDM network element.

For example, the registration function network element may select the UDM network element based on the permanent identifier of the terminal device. There may be a correspondence between the permanent identifier of the terminal device and the UDM network element. For example, one SUPI list corresponds to one UDM, or one UDM serves a group of SUPIs.

Then, the registration function network element may register with the UDM network element (that is, invoke an Nudm_UECM_Registration service). For example, the AMF may send, to the UDM network element, one or more of the following: an identifier of the registration function network element; the permanent identifier of the terminal device; a radio access technology type; and an access type. After the registration is completed, the registration function network element may obtain the access and mobility management subscription data of the terminal device from the UDM network element (that is, invoke an Nudm_SDM_Get service).

In addition, optionally, the registration function network element may alternatively select an AUSF network element based on the permanent identifier of the terminal device, and invoke the AUSF network element to initiate authentication on the terminal device. An authentication procedure may be briefly summarized as follows: The authentication on the terminal device is completed through interaction between the terminal device, the registration function network element, the AUSF network element, and the UDM network element complete. For specific implementation, refer to a conventional technology.

S706: The registration function network element obtains an AM policy from an AM-PCF network element, where the AM policy may include mobility restriction (mobility restriction) information.

S707: The registration function network element sends an identifier storage request message to an identifier storage function network element, where the identifier storage request message includes the temporary identifier and the permanent identifier of the terminal device. Correspondingly, the identifier storage function network element stores a correspondence between the temporary identifier and the permanent identifier of the terminal device.

Optionally, the identifier storage function network element may return an identifier storage response message to the registration function network element. For example, the identifier storage response message notifies the registration function network element that the identifier storage request message has been received, or the correspondence between the temporary identifier and the permanent identifier of the terminal device has been stored.

It may be understood that S707 may be performed before S705, or S707 may be performed after S704. A specific execution sequence is not limited in the present invention.

S708: The registration function network element sends an initial context setup request message to the access network device.

For example, the registration function network element may generate registration accept (registration accept), allowed NSSAI, and the like, and send the initial context setup request message to the access network device. The initial context setup request message may include one or more of the following: an AMF UE NGAP ID, the allowed NSSAI, the mobility restriction information, and the registration accept. The registration accept may be a second NAS PDU.

In addition, if the temporary identifier of the terminal device includes a fifth identifier, the registration function network element may further send the fifth identifier to the access network device. For example, the initial context setup request message further includes the fifth identifier, so that the access network device learns of the temporary identifier of the terminal device.

S709: After receiving the initial context setup request message, the access network device sends the second NAS PDU in the initial context setup request message to the terminal device.

S701 to S709 may be understood as a registration procedure of the terminal device. In the registration procedure of the terminal device, the identifier storage function network element may obtain and store the correspondence between the temporary identifier and the permanent identifier of the terminal device. After completing the registration procedure (for example, after the terminal device receives the second NAS PDU in the initial context setup request message), the terminal device may trigger a network element selection procedure, that is, perform S710 to S714.

S710: The terminal device sends a second AN message to the access network device, where the second AN message includes indication information, and the indication information indicates to select a target core network element for the terminal device.

Optionally, the indication information may include type information, and the type information indicates a type of the target core network element.

In addition, the second AN message may further include other possible information. For example, the second AN message may further include the air interface identifier of the terminal device (if the temporary identifier of the terminal device does not include the air interface identifier, the access network device may store a correspondence between the air interface identifier and the temporary identifier, so that the access network device may obtain the corresponding temporary identifier based on the air interface identifier).

For another example, the second AN message may further include a third NAS PDU. For example, when the type indicated by the type information is an SMF network element, the third NAS PDU may be a session establishment request; when the type indicated by the type information is a UE-PCF network element, the third NAS PDU is a policy establishment request; or when the type indicated by the type information is an SMSF network element, the third NAS PDU may be a short message service establishment request.

For another example, the second AN message may further include allowed NSSAI, or include the network information requested by the terminal device, an identifier of a PDU session, and the like.

S711: The access network device sends a second network element discovery request message (that is, the first request message in Embodiment 1) to the selection function network element based on the indication information, where the second network element discovery request message includes the type information and the temporary identifier of the terminal device.

Optionally, the second network element discovery request message may further include other possible information, for example, the allowed NSSAI or the network information requested by the terminal device (that is, a DNN requested by the terminal device and/or NSSAI requested by the terminal device). The allowed NSSAI is sent by the registration function network element to the access network device in S708, and the network information requested by the terminal device may be sent by the terminal device to the access network device in S701.

S712: The selection function network element obtains, from the identifier storage function network element based on the temporary identifier of the terminal device, the permanent identifier corresponding to the temporary identifier.

S713: The selection function network element obtains subscription data of the terminal device from the UDM network element based on the permanent identifier of the terminal device.

S714: The selection function network element selects a first core network element as the target core network element based on the subscription data, and sends address information of the first core network element to the access network device.

For example, a plurality of types of target core network elements may be selected for the terminal device by performing S710 to S714 for a plurality of times. For example, a target UE-PCF network element is selected for the terminal device by performing S710 to S714, a target SMF network element may be selected for the terminal device by performing S710 to S714 again (because the selection function network element has obtained the permanent identifier of the terminal device in a process of selecting the target UE-PCF network element, S712 may not be performed when S710 to S714 are performed again).

### Embodiment 5

In Embodiment 5, another detailed implementation procedure is described based on the solution in Embodiment 1. A difference between Embodiment 5 and Embodiment 4 lies in that, in Embodiment 4, a registration procedure and a network element selection procedure are independent, but in Embodiment 5, the network element selection procedure may be combined into the registration procedure.

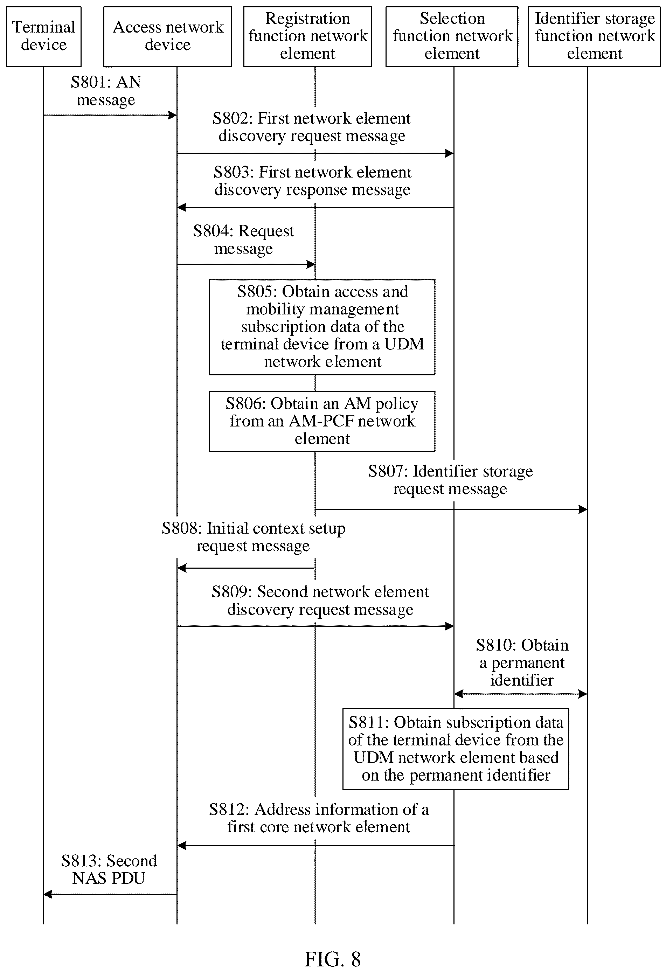

FIG. 8 is a schematic flowchart corresponding to a network element selection method according to Embodiment 5 of this application. As shown in FIG. 8, the method includes the following steps.

S801: A terminal device sends an AN message to an access network device.

For example, the AN message may include an AN parameter and a registration request, the registration request may be a first NAS PDU, and the AN message may be referred to as a registration request message.

The AN parameter may include a PLMN requested by the terminal device and an RRC establishment cause value, and may further include an air interface identifier of the terminal device.

The registration request may include registration type information, and optionally, further includes a permanent identifier of the terminal device.

S802: The access network device sends a first network element discovery request message to a selection function network element, where the first network element discovery request message is for requesting the selection function network element to select a target registration function network element for the terminal device.

S803: The selection function network element sends a first network element discovery response message to the access network device, where the first network element discovery response message includes address information of a registration function network element, and the registration function network element is the target registration function network element selected by the selection function network element for the terminal device.

S804: The access network device sends a request message to the registration function network element, where the request message may be an Namf_InitialUEMessage request.

S805: The registration function network element obtains access and mobility management subscription data of the terminal device from a UDM network element.

S806: The registration function network element obtains an AM policy from an AM-PCF network element.

S807: The registration function network element sends an identifier storage request message to an identifier storage function network element, where the identifier storage request message includes a temporary identifier and a permanent identifier of the terminal device. Correspondingly, the identifier storage function network element stores a correspondence between the temporary identifier and the permanent identifier of the terminal device.

S808: The registration function network element sends an initial context setup request message to the access network device, where the initial context setup request message includes indication information, and the indication information indicates to select a target core network element for the terminal device.

S809: After receiving the initial context setup request message, the access network device sends a second network element discovery request message (that is, the first request message in Embodiment 1) to the selection function network element based on the indication information, where the second network element discovery request message includes the type information and the temporary identifier of the terminal device.

Optionally, the second network element discovery request message further includes allowed NSSAI and the like.

S810: The selection function network element obtains, from the identifier storage function network element based on the temporary identifier of the terminal device, the permanent identifier corresponding to the temporary identifier.

S811: The selection function network element obtains subscription data of the terminal device from the UDM network element based on the permanent identifier of the terminal device.

S812: The selection function network element selects a first core network element as the target core network element based on the subscription data, and sends address information of the first core network element to the access network device.

S813: The access network device sends a second NAS PDU in the initial context setup request message to the terminal device.

It may be understood that, it can be learned from the foregoing procedure that, because network information requested by the terminal device is not carried in the registration request message of the terminal device (usually, the terminal device includes, only when initiating a session establishment request, the network information requested by the terminal device), the second network element discovery request message may include the allowed NSSAI, but does not include the network information requested by the terminal device. That is, through the foregoing procedure, the selection function network element may select a UE-PCF network element, an SMSF network element, or the like for the terminal device based on the subscription data of the terminal device and the allowed NSSAI, but cannot select an SMF network element for the terminal device based on the subscription data of the terminal device and the network information requested by the terminal device. Therefore, the foregoing procedure is applicable to the selection of the UE-PCF network element or the SMSF network element, but is not applicable to the selection of the SMF network element.

In addition, in Embodiment 5, after receiving the address information of the target core network element, the access network device may directly communicate with the target core network element based on the address information of the target core network element (for example, request the target core network element to establish a connection for the terminal device); or when receiving a policy establishment request or a short message service establishment request from the terminal device, the access network device may communicate with the target core network element based on the address information of the target core network element.

Embodiment 5 is described by using an example in which the initial context setup request message includes the indication information. In another possible implementation, the first AN message may alternatively include the indication information (in this case, the initial context setup request message may not include the indication information). Alternatively, neither the first AN message nor the initial context setup request message includes the indication information, but the first AN message or the initial context setup request message is for triggering the network element selection procedure.

### Embodiment 6

In Embodiment 6, a detailed implementation procedure is described based on Embodiment 3. Specifically, in Embodiment 6, an example in which a registration procedure and a network element selection procedure are independent is used. For the registration procedure, refer to the descriptions in Embodiment 4. A difference lies in that in Embodiment 6, an identifier storage function network element may not be set, and a registration function network element does not need to send an identifier storage request message to the identifier storage function network element. Further, in Embodiment 6, an access network device may obtain a permanent identifier of a terminal device. In a possible manner, the registration function network element may send the permanent identifier of the terminal device to the access network device in a registration procedure, or send a correspondence between a temporary identifier and the permanent identifier of the terminal device to the access network device. For example, the registration function network element may send the permanent identifier of the terminal device to the access network device by using an initial context setup request message, or send the correspondence between the temporary identifier and the permanent identifier of the terminal device to the access network device. In still another possible manner, the terminal device sends the permanent identifier of the terminal device to the access network device.

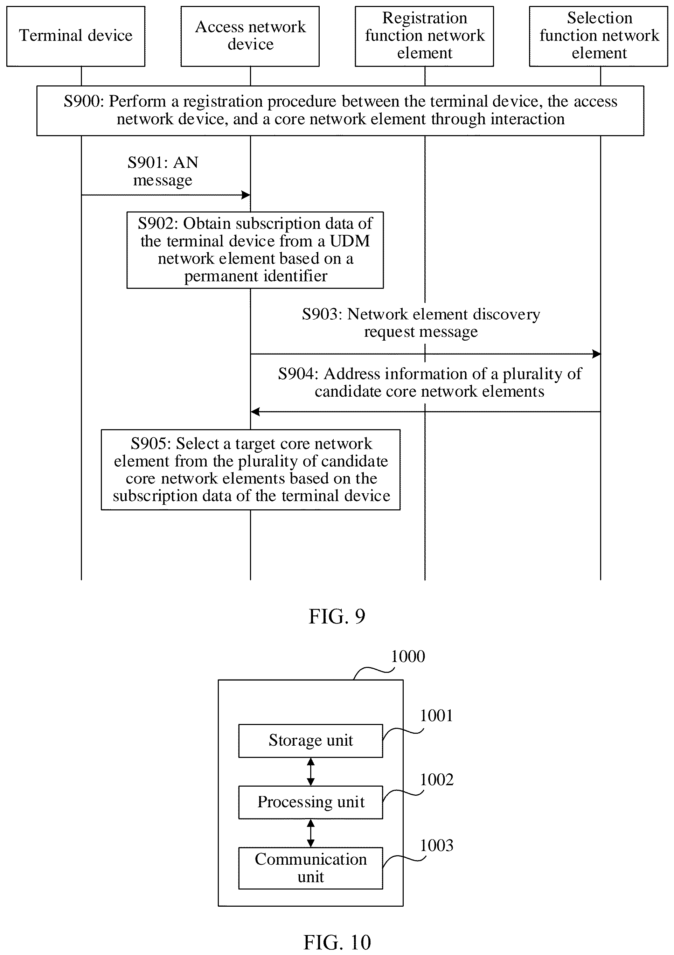

FIG. 9 is a schematic flowchart corresponding to a network element selection method according to Embodiment 6 of this application. As shown in FIG. 9, the method includes the following steps.

S900: Perform a registration procedure between the terminal device, the access network device, and a core network element through interaction.

S901: The terminal device sends an AN message to the access network device, where the AN message includes indication information, and the indication information indicates to select a target core network element for the terminal device.

S902: The access network device obtains subscription data of the terminal device from a UDM network element based on the permanent identifier of the terminal device.

For example, the access network device may determine a type of a to-be-selected target core network element, and obtain, from the UDM network element based on the permanent identifier of the terminal device and type information, subscription data needed for selecting the type of target core network element. Alternatively, the access network device may obtain network element selection subscription data (including subscription data needed for selecting various types of target core network elements) of the terminal device from the UDM network element based on the permanent identifier of the terminal device.

S903: The access network device sends a network element discovery request message (that is, the first request message in Embodiment 3) to the selection function network element, where the network element discovery request message includes the permanent identifier of the terminal device and the type information.

Optionally, the network element discovery request message further includes network information requested by the terminal device or another possible parameter. For example, the another possible parameter may be allowed NSSAI.

It may be understood that an example in which the network element discovery request message includes the permanent identifier of the terminal device is used above. In another possible implementation, the network element discovery request message may include the temporary identifier of the terminal device.

S904: The selection function network element sends address information of a plurality of candidate core network elements to the access network device.

Herein, for implementation of selecting the candidate core network elements by the selection function network element, refer to the descriptions in Embodiment 3.

S905: The access network device selects the target core network element from the plurality of candidate core network elements based on subscription data of the terminal device.

For example, in addition to the subscription data, the access network device may further select the target core network element based on other possible information, for example, local configuration information. The local configuration information may be a local policy configured by an operator, for example, information such as a network element selection preference of the operator.

In addition, the foregoing solution in which the access network device obtains the permanent identifier of the terminal device is not limited to being applied to the network element selection method provided in this embodiment of this application, or may be separately implemented, so that the access network device communicates with the core network element based on the permanent identifier of the terminal device.

For Embodiment 1 to Embodiment 6, it may be understood as follows:
(1) The solutions in Embodiment 1 to Embodiment 6 may be separately implemented, or may be implemented in combination with different embodiments. For example, the SMF network element may be selected for the terminal device through the solution in Embodiment 4, and the UE-PCF network element and/or the SMSF network element may be selected for the terminal device through the solution in Embodiment 5. That is, through a combination of Embodiment 4 and Embodiment 5, different types of core network elements are selected for the terminal device. There are a plurality of manners of combining different embodiments, and details are not listed herein one by one.
(2) The "allowed NSSAI" described in embodiments of this application may alternatively be replaced with NSSAI (for example, referred to as NSSAI initially requested by the terminal device, which is different from the foregoing "NSSAI requested by the terminal device") requested by the terminal device when the terminal device initiates a registration request. The allowed NSSAI may be determined by the registration function network element based on the NSSAI initially requested by the terminal device.
(3) Step numbers in the flowcharts described in Embodiment 1 to Embodiment 6 are merely an example of an execution procedure, and do not constitute any limitation on an execution sequence of the steps. In embodiments of this application, there is no strict execution sequence between steps that do not have a time sequence dependency relationship with each other. Not all the steps shown in the flowcharts are mandatory steps. Some steps may be deleted from the flowcharts based on an actual requirement, or another possible step may be added to the flowcharts based on an actual requirement.
(4) The foregoing descriptions focus on a difference between different embodiments in Embodiment 1 to Embodiment 6. For content other than the difference, mutual reference may be made between Embodiment 1 to Embodiment 6. In addition, in a same embodiment, mutual reference may also be made between different implementations or different examples.

The solutions provided in embodiments of this application are mainly described above from a perspective of interaction between the network elements. It may be understood that to implement the foregoing functions, each network element may include a corresponding hardware structure and/or software module for performing each function. A person skilled in the art should be easily aware that, in embodiments of this application, the units and algorithm steps in the examples described with reference to embodiments disclosed in this specification can be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, the selection function network element and the access network device may be divided into functional units based on the foregoing method examples. For example, each functional unit may be obtained through division based on each corresponding function, or two or more functions may be integrated into one unit. The integrated unit may be implemented in a form of hardware, or may be implemented in a form of a software functional unit.

When an integrated unit is used, FIG. 10 is a possible example block diagram of an apparatus according to an embodiment of this application. As shown in FIG. 10, the apparatus 1000 may include a processing unit 1002 and a communication unit 1003. The processing unit 1002 is configured to: control and manage an action of the apparatus 1000. The communication unit 1003 is configured to support the apparatus 1000 in communicating with another device. Optionally, the communication unit 1003 is also referred to as a transceiver unit, and may include a receiving unit and/or a sending unit, respectively configured to perform a receiving operation and a sending operation. The apparatus 1000 may further include a storage unit 1001, configured to store program code and/or data of the apparatus 1000.
(1) The apparatus 1000 may be the selection function network element in the foregoing embodiments, or may be a component (for example, a circuit or a chip) disposed in the selection function network element. The processing unit 1002 may support the apparatus 1000 in performing an action of the selection function network element in the foregoing method examples. Alternatively, the processing unit 1002 mainly performs an internal action of the selection function network element in the method examples, and the communication unit 1003 may support communication between the apparatus 1000 and another device.

For example, in an embodiment, the communication unit 1003 is configured to receive a first request message from an access network device, where the first request message is for requesting to select a target core network element for a terminal device, the first request message includes an identifier of the terminal device and type information, and the type information indicates a type of the target core network element. The processing unit 1002 is configured to: obtain subscription data of the terminal device based on the identifier of the terminal device; and select a first core network element as the target core network element based on the subscription data. The communication unit 1003 is further configured to send address information of the first core network element to the access network device.

In a possible design, the first request message further includes network information requested by the terminal device, and the network information requested by the terminal device indicates a requirement of the terminal device for accessing a network; and selecting the first core network element as the target core network element based on the first subscription data includes: selecting the first core network element as the target core network element based on the first subscription data and the network information requested by the terminal device.

In a possible design, the network information requested by the terminal device includes one or more of the following: a data network name DNN requested by the terminal device and network slice selection assistance information NSSAI requested by the terminal device.

In a possible design, the identifier of the terminal device is a temporary identifier; and the processing unit 1002 is further configured to: obtain a permanent identifier corresponding to the temporary identifier; and obtain the first subscription data of the terminal device based on the permanent identifier.

In a possible design, the communication unit 1003 is further configured to: send the temporary identifier to an identifier storage function network element; and receive, from the identifier storage function network element, the permanent identifier corresponding to the temporary identifier.

In a possible design, the temporary identifier does not include an access and mobility management function AMF region identifier and/or an AMF set identifier.

In a possible design, the identifier of the terminal device is a permanent identifier.

(2) The apparatus 1000 may be the access network device in the foregoing embodiments, or may be a component (for example, a circuit or a chip) disposed in the access network device. The processing unit 1002 may support the apparatus 1000 in performing an action of the access network device in the foregoing method examples. Alternatively, the processing unit 1002 mainly performs an internal action of the access network device in the method examples, and the communication unit 1003 may support communication between the apparatus 1000 and another device.

For example, in an embodiment, the communication unit 1003 is configured to: send a first request message to a selection function network element, where the first request message is for requesting to select a target core network element for a terminal device, the first request message includes an identifier of the terminal device and type information, and the type information indicates a type of the target core network element; and receive address information of a first core network element from the selection function network element, where the first core network element is the target core network element selected for the terminal device.

It should be understood that division into the units in the apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program, and a processing element of the apparatus invokes the program to perform a function of the unit. In addition, all or some of the units may be integrated together, or may be implemented independently. The processing element herein may also be referred to as a processor, and may be an integrated circuit having a signal processing capability. In an implementation process, operations in the foregoing methods or the foregoing units may be implemented by using a hardware integrated logic circuit in the processor element or may be implemented in a form in which the processing element invokes software.

In an example, the unit in any one of the foregoing apparatuses may be one or more integrated circuits configured to implement the foregoing methods, for example, one or more application-specific integrated circuits (application-specific integrated circuits, ASICs), one or more microprocessors (digital signal processors, DSPs), one or more field programmable gate arrays (field programmable gate arrays, FPGAs), or a combination of at least two of these integrated circuit forms. For another example, when the units in the apparatus may be implemented in a form in which a processing element schedules a program, the processing element may be a processor, for example, a general-purpose central processing unit (central processing unit, CPU) or another processor that can invoke the program. For still another example, the units may be integrated and implemented in a form of a system-on-a-chip (system-on-a-chip, SoC).

The foregoing unit configured to perform receiving is an interface circuit of the apparatus, and is configured to receive a signal from another apparatus. For example, when the apparatus is implemented in a manner of a chip, the receiving unit is an interface circuit that is of the chip and that is configured to receive a signal from another chip or apparatus. The foregoing unit configured to perform sending is an interface circuit of the apparatus, and is configured to send a signal to another apparatus. For example, when the apparatus is implemented in the manner of the chip, the sending unit is an interface circuit that is of the chip and that is configured to send a signal to another chip or apparatus.

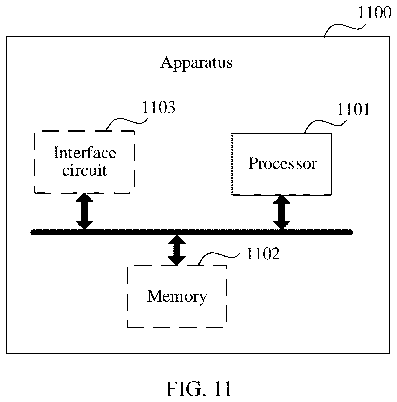

FIG. 11 is a diagram of a structure of an apparatus according to an embodiment of this application. The apparatus 1100 may be the selection function network element, the registration function network element, or the access network device in the foregoing embodiments, and is configured to implement a function of the selection function network element, the registration function network element, or the access network device in the foregoing embodiments.

As shown in FIG. 11, the apparatus 1100 may include a processor 1101, a memory 1102, and an interface circuit 1103. The processor 1101 may be configured to: process a communication protocol and communication data, and control the apparatus 1100. The memory 1102 may be configured to store a program and data, and the processor 1101 may perform, based on the program, the method performed by the apparatus 1100 in embodiments of this application. The interface circuit 1103 may be used by the apparatus 1100 to communicate with another device. The communication may be wired communication or wireless communication. The interface circuit may be, for example, a service-based interface.

The memory 1102 may alternatively be externally connected to the apparatus 1100. In this case, the apparatus 1100 may include the interface circuit 1103 and the processor 1101. The interface circuit 1103 may alternatively be externally connected to the apparatus 1100. In this case, the apparatus 1100 may include the memory 1102 and the processor 1101. When both the interface circuit 1103 and the memory 1102 are externally connected to the apparatus 1100, the apparatus 1100 may include the processor 1101.

The apparatus 1100 shown in FIG. 11 can implement processes related to the apparatus 1100 in the foregoing method embodiments. Operations and/or functions of modules in the apparatus 1100 shown in FIG. 11 are separately intended to implement corresponding procedures in the foregoing method embodiments. For details, refer to the descriptions in the foregoing method embodiments. To avoid repetition, detailed descriptions are properly omitted herein.

Terms "system" and "network" may be used interchangeably in embodiments of this application. "At least one" means one or more, and "a plurality of" means two or more. "And/or" describes an association relationship between associated objects, and indicates that three relationships may exist. For example, A and/or B may indicate the following three cases: A exists alone, both A and B exist, and B exists alone, where A and B may be singular or plural. The character "/" usually indicates an "or" relationship between the associated objects. "At least one of the following items (pieces)" or a similar expression thereof indicates any combination of these items, including a single item (piece) or any combination of a plurality of items (pieces). For example, "at least one of A, B, or C" includes A, B, C, AB, AC, BC, or ABC, and "at least one of A, B, and C" may also be understood as including A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, a priority, or importance of the plurality of objects.

A person skilled in the art should understand that embodiments of this application may be provided as a method, a system, or a computer program product. Therefore, this application may use a form of hardware-only embodiments, software-only embodiments, or an embodiment with a combination of software and hardware. In addition, this application may use a form of a computer program product that is implemented on one or more computer-usable storage media (including but not limited to a disk memory, an optical memory, and the like) that include computer-usable program code.

This application is described with reference to the flowcharts and/or the block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more procedures in the flowcharts and/or in one or more blocks in the block diagrams.

These computer program instructions may alternatively be stored in a computer-readable memory that can indicate the computer or any other programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, to generate computerimplemented processing. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the spirit and scope of this application. In this way, if these modifications and variations to this application fall within the scope of the claims of this application and their equivalent technologies, this application is also intended to cover these modifications and variations.

## Claims

1. A network element selection method, wherein the method comprises:
receiving a first request message from an access network device, wherein the first request message is for requesting to select a target core network element for a terminal device, the first request message comprises an identifier of the terminal device and type information, and the type information indicates a type of the target core network element;
obtaining subscription data of the terminal device based on the identifier of the terminal device;
selecting a first core network element as the target core network element based on the subscription data; and
sending address information of the first core network element to the access network device.

2. The method according to claim 1, wherein the first request message further comprises network information requested by the terminal device, and the network information requested by the terminal device indicates a requirement of the terminal device for accessing a network; and
selecting the first core network element as the target core network element based on the first subscription data comprises:
selecting the first core network element as the target core network element based on the first subscription data and the network information requested by the terminal device.

3. The method according to claim 2, wherein the network information requested by the terminal device comprises one or more of the following:
a data network name DNN requested by the terminal device; and
network slice selection assistance information NSSAI requested by the terminal device.

4. The method according to any one of claims 1 to 3, wherein the identifier of the terminal device is a temporary identifier; and
obtaining the subscription data of the terminal device based on the identifier of the terminal device comprises:
obtaining a permanent identifier corresponding to the temporary identifier; and
obtaining the first subscription data of the terminal device based on the permanent identifier.

5. The method according to claim 4, wherein obtaining the permanent identifier corresponding to the temporary identifier comprises:
sending the temporary identifier to an identifier storage function network element; and
receiving, from the identifier storage function network element, the permanent identifier corresponding to the temporary identifier.

6. The method according to claim 4 or 5, wherein the temporary identifier does not comprise an access and mobility management function AMF region identifier and/or an AMF set identifier.

7. The method according to any one of claims 1 to 3, wherein the identifier of the terminal device is a permanent identifier.

8. A network element selection method, wherein the method comprises:
sending a first request message to a selection function network element, wherein the first request message is for requesting to select a target core network element for a terminal device, the first request message comprises an identifier of the terminal device and type information, and the type information indicates a type of the target core network element; and
receiving address information of a first core network element from the selection function network element, wherein the first core network element is the target core network element selected for the terminal device.

9. The method according to claim 8, wherein sending the first request message to the selection function network element comprises:
receiving indication information from the terminal device or a registration function network element, wherein the indication information indicates to select the target core network element for the terminal device; and
sending the first request message to the selection function network element based on the indication information.

10. The method according to claim 9, wherein the indication information comprises the type information.

11. The method according to claim 9 or 10, wherein the first request message further comprises network information requested by the terminal device, and the network information requested by the terminal device is used to select the target core network element.

12. The method according to any one of claims 8 to 11, wherein the identifier of the terminal device is a temporary identifier.

13. The method according to claim 12, wherein the temporary identifier does not comprise an access and mobility management function AMF region identifier and/or an AMF set identifier.

14. The method according to any one of claims 8 to 11, wherein the identifier of the terminal device is a permanent identifier.

15. The method according to claim 14, wherein the method further comprises:
receiving the permanent identifier from the registration function network element, and storing a correspondence between a temporary identifier and the permanent identifier of the terminal device; or receiving correspondence information from the registration function network element, wherein the correspondence information indicates a correspondence between the temporary identifier and the permanent identifier.

16. The method according to any one of claims 8 to 15, wherein the method further comprises:
sending a second request message to the first core network element based on the address information of the first core network element, wherein the second request message comprises the identifier of the terminal device, and the second request message is for requesting to establish a connection for the terminal device;
receiving address information of a second core network element from the first core network element or the selection function network element, wherein a type of the second core network element is the same as a type of the first core network element; and
sending the second request message to the second core network element based on the address information of the second core network element.

17. A network element selection method, wherein the method comprises:
receiving a second request message from an access network device, wherein the second request message comprises an identifier of a terminal device, and the second request message is for requesting to establish a connection for the terminal device;
selecting a second core network element for the terminal device based on the second request message; and
forwarding the second request message to the second core network element, or sending address information of the second core network element to the access network device.

18. The method according to claim 17, wherein selecting the second core network element for the terminal device based on the second request message comprises:
obtaining subscription data of the terminal device based on the identifier of the terminal device; and
selecting the second core network element for the terminal device based on the subscription data.

19. The method according to claim 18, wherein the second request information further comprises network information requested by the terminal device, and the network information requested by the terminal device indicates a requirement of the terminal device for accessing a network; and
selecting the second core network element for the terminal device based on the subscription data comprises:
selecting the second core network element for the terminal device based on the subscription data and the network information requested by the terminal device.

20. The method according to any one of claims 17 to 19, wherein the identifier of the terminal device is a temporary identifier; and
obtaining the subscription data of the terminal device based on the identifier of the terminal device comprises:
obtaining a permanent identifier corresponding to the temporary identifier; and
obtaining the subscription data of the terminal device based on the permanent identifier.

21. The method according to claim 20, wherein obtaining the permanent identifier corresponding to the temporary identifier comprises:
sending the temporary identifier to an identifier storage function network element; and
receiving, from the identifier storage function network element, the permanent identifier corresponding to the temporary identifier.

22. The method according to claim 20 or 21, wherein the temporary identifier does not comprise an access and mobility management function AMF region identifier and/or an AMF set identifier.

23. The method according to any one of claims 17 to 19, wherein the identifier of the terminal device is a permanent identifier.

24. A network element selection method, wherein the method comprises:
receiving a first request message from an access network device, wherein the first request message is for requesting to select candidate core network elements for a terminal device, the first request message comprises an identifier of the terminal device and type information, and the type information indicates types of the candidate core network elements;
selecting the plurality of candidate core network elements for the terminal device based on the first request message; and
sending address information of the plurality of candidate core network elements to the access network device.

25. The method according to claim 24, wherein the first request message comprises network information requested by the terminal device and/or allowed NSSAI; and
selecting the plurality of candidate core network elements for the terminal device based on the first request message comprises:
selecting the plurality of candidate core network elements for the terminal device based on the network information requested by the terminal device and/or the allowed NSSAI.

26. A network element selection method, wherein the method comprises:
sending a first request message to a selection function network element, wherein the first request message is for requesting to select candidate core network elements of a target core network element for a terminal device, the first request message comprises an identifier of the terminal device and type information, and the type information indicates a type of the target core network element;
receiving address information of the plurality of candidate core network elements from the selection function network element;
obtaining subscription data of the terminal device based on the identifier of the terminal device; and
selecting a first core network element from the plurality of candidate core network elements as the target core network element based on the subscription data.

27. The method according to claim 26, wherein the first request message further comprises network information requested by the terminal device, and the network information is used to select the plurality of candidate core network elements.

28. The method according to claim 26 or 27, wherein obtaining the subscription data of the terminal device comprises:
receiving the subscription data from a registration function network element; and obtaining, by the access network device, the subscription data from a unified data management UDM network element.

29. The method according to any one of claims 26 to 28, wherein sending the first request message to the selection function network element comprises:
receiving indication information from the terminal device or the registration function network element, wherein the indication information indicates to select the target core network element for the terminal device; and
sending the first request message to the selection function network element based on the indication information.

30. The method according to any one of claims 26 to 29, wherein the indication information comprises the type information.

31. The method according to any one of claims 26 to 30, wherein the identifier of the terminal device is a temporary identifier or a permanent identifier.

32. The method according to claim 31, wherein the method further comprises:
receiving the permanent identifier from the registration function network element, and storing a correspondence between the temporary identifier and the permanent identifier; or
receiving correspondence information from the registration function network element, wherein the correspondence information indicates a correspondence between the temporary identifier and the permanent identifier.

33. A network element selection method, wherein the method comprises:
sending a first request message to a selection function network element, wherein the first request message is for requesting to select a target core network element for a terminal device, the first request message comprises an identifier of the terminal device and type information, and the type information indicates a type of the target core network element;
receiving the first request message from an access network device;
obtaining subscription data of the terminal device based on the identifier of the terminal device;
selecting a first core network element as the target core network element based on the subscription data;
sending address information of the first core network element to the access network device; and
receiving the address information of the first core network element from the selection function network element.

34. A network element selection method, wherein the method comprises:
sending a first request message to a selection function network element, wherein the first request message is for requesting to select candidate core network elements of a target core network element for a terminal device, the first request message comprises an identifier of the terminal device and type information, and the type information indicates a type of the target core network element;
receiving the first request message from an access network device;
selecting the plurality of candidate core network elements for the terminal device based on the first request message;
sending address information of the plurality of candidate core network elements to the access network device;
receiving the address information of the plurality of candidate core network elements from the selection function network element;
obtaining subscription data of the terminal device based on the identifier of the terminal device; and
selecting a first core network element from the plurality of candidate core network elements as the target core network element based on the subscription data.

35. A communication apparatus, comprising a unit configured to perform the method according to any one of claims 1 to 7, a unit configured to perform the method according to any one of claims 8 to 16, a unit configured to perform the method according to any one of claims 17 to 23, a unit configured to perform the method according to claim 24 or 25, or a unit configured to perform the method according to any one of claims 26 to 32.

36. A communication apparatus, comprising a processor, wherein the processor is coupled to a memory, and the memory stores a computer program; and the processor is configured to invoke the computer program in the memory, to enable the communication apparatus to perform the method according to any one of claims 1 to 7, the method according to any one of claims 8 to 16, the method according to any one of claims 17 to 23, the method according to claim 24 or 25, or the method according to any one of claims 26 to 32.

37. A communication system, wherein the communication system comprises a selection function network element and an access network device; and the selection function network element is configured to perform the method according to any one of claims 1 to 7, and the access network device is configured to perform the method according to any one of claims 8 to 16.

38. The system according to claim 37, wherein the communication system further comprises a first core network element, and the first core network element is configured to perform the method according to any one of claims 17 to 23.

39. A communication system, wherein the communication system comprises a selection function network element and an access network device; and the selection function network element is configured to perform the method according to claim 24 or 25, and the access network device is configured to perform the method according to any one of claims 26 to 32.

40. A computer-readable storage medium, wherein the storage medium stores a computer program or instructions, and when the computer program or the instructions are executed by a computer, the method according to any one of claims 1 to 7, the method according to any one of claims 8 to 16, the method according to any one of claims 17 to 23, the method according to claim 24 or 25, or the method according to any one of claims 26 to 32 is implemented.

41. A computer program product, wherein when a computer reads and executes the computer program product, the computer is enabled to perform the method according to any one of claims 1 to 7, the method according to any one of claims 8 to 16, the method according to any one of claims 17 to 23, the method according to claim 24 or 25, or the method according to any one of claims 26 to 32.
